# EUROPÄISCHE PATENTSCHRIFT

(11) **EP 3 774 157 B1**
(45) Veröffentlichungstag und Bekanntmachung des Hinweises auf die Patenterteilung: **23.10.2024**
(21) Anmeldenummer: 19717812.2
(22) Anmeldetag: 09.04.2019
(51) Int. Cl.: B23K 26/00, B23K 26/06, B23K 26/067, B23K 26/08, B23K 26/38, G02B 27/28, G02B 6/27

(54) **LASERBEARBEITUNGSMASCHINE UND VERFAHREN ZUM BEARBEITEN EINES WERKSTÜCKS**
LASER PROCESSING MACHINE AND METHOD FOR MACHINING A WORKPIECE
MACHINE D'USINAGE À LASER ET PROCÉDÉ D'USINAGE D'UNE PIÈCE

(30) Priorität: 12.04.2018 DE 102018205545
(43) Veröffentlichungstag der Anmeldung: 17.02.2021
(73) Patentinhaber: TRUMPF Werkzeugmaschinen SE + Co. KG, 71254 Ditzingen (DE)
(72) Erfinder: FLAMM, Daniel, 70806 Kornwestheim (DE); HÄCKER, Tobias, 71254 Ditzingen (DE)
(74) Vertreter: Trumpf Patentabteilung
(86) Internationale Anmeldenummer: PCT/EP2019/058994
(87) Internationale Veröffentlichungsnummer: WO 2019/197423

(56) Entgegenhaltungen:
- EP-A1- 2 460 614
- WO-A1-2015/128833
- DE-A1- 10 201 315
- DE-A1- 102008 041 728
- DE-A1- 102011 116 833
- DE-T5- 112015 000 994

## Beschreibung

Die vorliegende Erfindung betrifft eine Vorrichtung, insbesondere einen Laserbearbeitungskopf, zur Bearbeitung eines Werkstücks mittels mindestens eines Laserstrahls, umfassend: mindestens ein doppelbrechendes Strahlteilerelement zur Aufteilung des Laserstrahls, der auf eine Strahleintrittsfläche des doppelbrechenden Strahlteilerelements auftrifft, auf zwei Teilstrahlen, wobei das doppelbrechende Strahlteilerelement eine nicht parallel zur Strahleintrittsfläche ausgerichtete Strahlaustrittsfläche zum Austritt der beiden Teilstrahlen aufweist, sowie eine Fokussieroptik zur Fokussierung der Teilstrahlen auf mindestens zwei Fokusflächen in einer Fokusebene, wobei die Strahleintrittsfläche und bevorzugt auch die Strahlaustrittsfläche des doppelbrechenden Strahlteilerelements zu einer optischen Achse der Fokussieroptik geneigt (d.h. nicht senkrecht und nicht parallel) ausgerichtet sind. Die Erfindung betrifft auch eine Laserbearbeitungsmaschine mit einer solchen Vorrichtung, insbesondere mit einem solchen Laserbearbeitungskopf, sowie zugehörige Verfahren zum Bearbeiten, insbesondere zum Laserschneiden, eines Werkstücks.

In der Lasermaterialbearbeitung finden unterschiedliche Laserstrahlquellen Verwendung. Für das Laserschneiden metallischer Werkstoffe wurden lange hauptsächlich CO₂-Laser mit einer Laserwellenlänge von ca. 10 µm eingesetzt. In den letzten Jahren haben jedoch Festkörperlaser mit einer Laserwellenlänge im Bereich von 1 µm aufgrund höherer möglicher Schneidgeschwindigkeiten vor allem bei geringen Werkstückdicken und aufgrund der besseren Energieeffizienz zunehmend an Bedeutung gewonnen.

Im Vergleich zur Verwendung einer Laserwellenlänge von 10 µm weisen die Schneidergebnisse bei 1 µm jedoch häufig eine größere Schnittkantenrauigkeit, Riefenbildung und Gratbildung auf. Mit zunehmender Blechdicke verstärken sich diese Effekte.

Zur Verbesserung der Schnittkantenqualität wurde vorgeschlagen, die Polarisation des Festkörperlaserstrahls gezielt zu beeinflussen. So wird beispielsweise in WO2010016028A1 radial polarisierte Laserstrahlung als vorteilhaft für das Laserschneiden beschrieben. Zur Erzeugung der radial polarisierten Laserstrahlung wird dort vorgeschlagen, in einem Laserresonator einen möglichst großen Anteil eines azimutalen Polarisationszustandes zu erzeugen, und den azimutalen Polarisationszustand mittels einer Polarisatorvorrichtung in einen radialen Polarisationszustand zu wandeln. Die von Festkörperlasern erzeugte Laserstrahlung wird allerdings normalerweise in einer Transportfaser geführt, die den Polarisationszustand der Laserstrahlung nicht erhält, so dass nach der Transportfaser zufällig polarisierte Laserstrahlung vorliegt, die - häufig unter Leistungsverlust - mittels verschiedener optischer Komponenten in radial polarisierte Strahlung umgeformt werden muss.

In EP2580019B1 wird vorgeschlagen, beim Laserschneiden den Laserstrahl durch mindestens zwei radial polarisierte Teilstrahlen zu bilden, die in Vorschubrichtung versetzt zueinander auf das Werkstück einwirken. Alternativ kann der Laserstrahl mehrere sich in Vorschubrichtung erstreckende Strahlstreifen mit jeweils unterschiedlicher linearer Polarisation aufweisen. Zur Erzeugung solcher Laserstrahlen mit Hilfe einer im Bearbeitungskopf der Laserschneidmaschine angeordneten Optik ist allerdings typischerweise ebenfalls ein linear polarisierter Eingangsstrahl notwendig.

In DE102011116833A1 wird eine Laserbearbeitungsmaschine beschrieben, die Mittel zur Reduktion einer Polarisation eines fasergeführten unpolarisierten Laserstrahls auf zwei in Strahlrichtung gesehen quer aufeinander stehende lineare Polarisationsrichtungen aufweist. Die Laserbearbeitungsmaschine umfasst in einem Ausführungsbeispiel ein polarisierendes Strahlteilelement, welches zur Aufteilung des kollimierten Laserstrahls in einen p-linearpolarisierten Teilstrahl und einen dazu räumlich versetzt parallel verlaufenden s-linearpolarisierten Teilstrahl eingerichtet ist.

Allerdings sind der in DE102011116833A1 erzielte Versatz der Strahlen und der Einfluss auf die Bearbeitungsqualität gering, weshalb in WO2015/128833A1 vorgeschlagen wird, ein polarisierendes Strahlversatzelement in einem konvergenten oder divergenten Laserstrahl-Abschnitt anzuordnen. Das polarisierende Strahlversatzelement kann als doppelbrechende planparallele Platte ausgebildet sein. Um ein rotationssymmetrisches Strahlprofil zu erzeugen, kann das Strahlversatzelement mit hoher Frequenz rotiert werden. Die beiden Teilstrahlen können bei der Bearbeitung eines Werkstücks in der Fokusebene in Bezug zu einer Vorschubrichtung der Bearbeitung hintereinander angeordnet sein.

In EP2722127B1 wird vorgeschlagen, die Rauigkeit der Schnittkante durch Einsatz einer Vorrichtung zu verringern, bei der eine Mehrzahl optischer Fasern in einer oder mehreren Ringformen angeordnet ist, die jeweils einen linear polarisierten Laserstrahl übertragen. Die Polarisationsrichtung der aus den Fasern in Richtung auf das Werkstück austretenden Strahlen ist dabei radial nach außen ausgerichtet. Für eine solche Vorrichtung ist der Einsatz von polarisationserhaltenden optischen Fasern notwendig.

In der WO2015/130920A1 wird ein unpolarisierter Strahl mittels eines Strahlteilelements in zwei linear zueinander polarisierte Teilstrahlen aufgeteilt, die nicht parallel propagieren.

Aus der EP2460614B1, welche die Basis für den Oberbegriff von Anspruch 1 bildet, ist es außerdem bekannt, einen unpolarisierten Strahl mit Hilfe eines doppelbrechenden Prismas in zwei linear zueinander polarisierte Teilstrahlen aufzuteilen, die unter einem Winkel zueinander (nicht parallel) propagieren. Die beiden Teilstrahlen werden mit einer Fokussieroptik in Form einer Fokussierlinse derart zusammengeführt, dass diese eines oder mehrere Paare von Strahlflecken bilden.

Ferner ist es bekannt, Polarisationseigenschaften von Laserstrahlung beispielsweise zur steuerbaren Veränderung des Strahlparameterprodukts eines Bearbeitungslaserstrahls einzusetzen, wie dies in der DE 11 2015 000 004 T5 beschrieben ist.

### Aufgabe der Erfindung

Demgegenüber stellt sich der vorliegenden Erfindung die Aufgabe, eine alternative Vorrichtung, insbesondere einen Laserbearbeitungskopf, zur Bearbeitung eines Werkstücks mittels mindestens eines Laserstrahls bereitzustellen, welche die Beeinflussung der Polarisation des Laserstrahls zur Verbesserung des Bearbeitungsergebnisses ermöglicht, sowie entsprechende Verfahren zum Bearbeiten eines Werkstücks, insbesondere zum Laserschneiden, anzugeben.

### Gegenstand der Erfindung

Diese Aufgabe wird erfindungsgemäß durch eine Laserbearbeitungsmaschine gelöst, die eine Vorrichtung der eingangs genannten Art in Form eines Laserbearbeitungskopfs aufweist, wobei der Laserbearbeitungskopf ausgebildet ist, den Laserstrahl senkrecht zur Strahleintrittsfläche auf das doppelbrechende Strahlteilerelement einzustrahlen. Der Laserstrahl trifft somit nicht parallel, sondern schräg, d.h. unter einem typischerweise kleinen Winkel (in radialer Richtung, ggf. auch in azimutaler Richtung, s.u.) zur optischen Achse der Fokussieroptik auf die Strahleintrittsfläche auf.

Erfindungsgemäß umfasst die Laserbearbeitungsmaschine ferner ein nicht polarisationserhaltendes Lichtleitkabel zur Zuführung des Laserstrahls zu dem Laserbearbeitungskopf (d.h. zu der Vorrichtung). Durch den doppelbrechenden Strahlteiler wird ein einfallender, zufällig polarisierter bzw. unpolarisierter Laserstrahl in zwei Teilstrahlen mit zueinander senkrechter linearer Polarisation aufgeteilt, die beide unter einem Winkel zur Strahlachse des einfallenden Laserstrahls aus dem Strahlteiler austreten. Durch die nachfolgende Fokussieroptik (Linse, Linsengruppe, Spiegel, etc.) werden die Teilstrahlen auf zwei Fokusflächen (Fokusspots) in der Fokusebene fokussiert, die sich beispielsweise an der Oberseite des Werkstücks oder in der Nähe der Oberseite des Werkstücks befindet. Hierdurch wird die Strahlqualität des Laserstrahls reduziert, was aber bei einer Werkstückbearbeitung insbesondere in Form des Laserschneidens von Werkstücken mit größerer Werkstückdicke ggf. ohnehin von Vorteil ist. Mit Hilfe der erfindungsgemäßen Vorrichtung wird daher die gleichzeitige Steigerung von Schnittkantenqualität und Schneidgeschwindigkeit ermöglicht.

Da eine Winkel-Differenz zwischen den beiden Teilstrahlen beim Austritt aus der Strahlaustrittsfläche deutlich geringer ist als eine Ablenkung, die beide Teilstrahlen relativ zur Strahlachse des in das doppelbrechende Strahlteilerelement eintretenden Laserstrahls erfahren, wird erfindungsgemäß das mindestens eine doppelbrechende Strahlteilerelement, genauer gesagt sowohl dessen Strahleintrittsfläche als auch dessen Strahlaustrittsfläche, unter einem Winkel ungleich 90° oder 180° zur optischen Achse der nachfolgenden Fokussieroptik angeordnet.

Der auf das Strahlteilerelement auftreffende, in der Regel zufällig polarisierte bzw. unpolarisierte Laserstrahl wird senkrecht zur Strahleintrittsfläche des doppelbrechenden Strahlteilerelements und damit geneigt gegenüber der optischen Achse der Fokussieroptik ausgerichtet. Zu diesem Zweck kann die Vorrichtung beispielsweise eine schräg zur optischen Achse der Fokussieroptik ausgerichtete Steckeraufnahme zur Ankopplung eines Laser-Lichtleitkabels und/oder transmissive oder reflektive optische Elemente, beispielsweise Umlenkspiegel, zur Umlenkung des der Vorrichtung zugeführten Laserstrahls aufweisen. Auch das weiter unten beschriebene Strahlformungselement kann für eine schräge Ausrichtung des/der Laserstrahlen relativ zur optischen Achse der Fokussieroptik verwendet werden. Der Laserstrahl trifft somit nicht parallel, sondern schräg, d.h. unter einem Winkel von beispielsweise (bei einem Strahlteilerelement aus Quarz) ca. 10 mrad bis ca. 500 mrad (in radialer Richtung, ggf. auch in azimutaler Richtung, s.u.) zur optischen Achse der Fokussieroptik auf die Strahleintrittsfläche auf. Durch diese erfindungsgemäße Ausrichtung können der ordentliche und der außerordentliche Teilstrahl z.B. symmetrisch zur Fokussieroptik abgelenkt werden, was eine kompakte Bauweise der Vorrichtung, insbesondere in Form des Laserbearbeitungskopfs, ermöglicht.

Bei einer Ausführungsform ist eine optische Achse des doppelbrechenden Materials des doppelbrechenden Strahlteilerelements parallel zur Strahleintrittsfläche ausgerichtet. Bei einer solchen Ausrichtung der optischen Achse (Kristallachse) des Strahlteilerelements parallel zur Strahleintrittsfläche wird die Winkel-Differenz zwischen dem ordentlichen und dem außerordentlichen Teilstrahl beim Austritt aus der Strahlaustrittsfläche des doppelbrechenden Strahlteilerelements maximal. Bei dem doppelbrechenden Material des Strahlteilerelements kann es sich beispielsweise um einen optisch einachsigen doppelbrechenden Kristall handeln.

Fällt bei einer solchen Ausrichtung der Kristallachse ein zufällig polarisierter Laserstrahl senkrecht auf die Strahleintrittsfläche des doppelbrechenden Strahlteilerelements ein, so teilt sich der Laserstrahl in zwei senkrecht zueinander polarisierte Teilstrahlen auf, deren Poyntingvektoren die ursprüngliche Richtung beibehalten, deren Wellenvektoren aber unterschiedliche Beträge haben. Dadurch werden die beiden Teilstrahlen an der nicht parallel zur Strahleintrittsfläche ausgerichteten Strahlaustrittsfläche unterschiedlich stark gebrochen, weisen aber keinen räumlichen Versatz zueinander auf. Die weiter oben beschriebene Ausrichtung der optischen Achse hat somit den zusätzlichen Vorteil, dass beide Teilstrahlen an derselben Stelle aus der Strahlaustrittsfläche des doppelbrechenden Strahlteilerelements austreten.

Bei einer Ausführungsform treten die beiden Teilstrahlen an der Strahlaustrittsfläche des doppelbrechenden Strahlteilerelements mit einem Differenz-Winkel aus, der zwischen 0,25 mrad und 10 mrad liegt. Der entstehende Winkelunterschied zwischen den beiden Teilstrahlen liegt für leistungstaugliche Materialien nur im Bereich einiger mrad, weshalb für andere Anwendungen typischerweise zwei Strahlteilerelemente mit unterschiedlicher Orientierung der optischen Achse verkittet werden, was die Leistungstauglichkeit der Vorrichtung erheblich einschränkt. Im vorliegenden Fall, d.h. bei der Werkstückbearbeitung, ist diese Winkel-Differenz aber völlig ausreichend, um bei der Fokussierung der Teilstrahlen in die Fokusebene einen lateralen Versatz zwischen den Fokusflächen in der Größenordnung des Durchmessers einer oder ggf. mehreren Fokusflächen zu erzielen.

Bei einer weiteren Ausführungsform ist das doppelbrechende Strahlteilerelement aus Quarz, d.h. aus einem Quarzkristall, gebildet. Bei Quarz handelt es sich um einen uniaxialen Kristall, der auch hohen Strahlungsleistungen standhält. Vorzugsweise wird das Strahlteilerelement aus Quarz so geschnitten, dass eine Fläche des Strahteilerelements parallel zur optischen Achse des Kristalls verläuft. Bei dieser Fläche handelt es sich typischerweise um die Strahleintrittsfläche. Bei einer geeigneten Wahl des (Fasen-)Winkels zwischen der Flächennormalen der Strahlaustrittsfläche und der Strahleintrittsfläche (s.u.) können bei Quarz als doppelbrechendem Material Winkel-Differenzen in der oben angegebenen Größenordnung erzeugt werden.

Bei einer weiteren Ausführungsform ist das doppelbrechende Strahlteilerelement so ausgebildet, dass die Strahlaustrittsfläche unter einem Fasenwinkel zur Flächennormalen der Strahleintrittsfläche ausgerichtet ist, der bevorzugt zwischen 50° und 89°, bevorzugt zwischen 60° und 85°, beträgt. Bei dieser Ausführungsform kann das doppelbrechende Strahlteilerelement im Wesentlichen keilförmig ausgebildet sein, wobei eine der Spitze des Keils abgewandte Stirnseite des Strahlteilerelements unter einem rechten Winkel zur Strahleintrittsfläche ausgerichtet sein kann. Die Strahlaustrittsfläche ist schräg zur Strahleintrittsfläche ausgerichtet, d.h. diese bildet eine Fase und ist unter einem (Fasen-)Winkel zur Flächennormalen der Strahleintrittsfläche ausgerichtet. Um bei Quarz als Material des doppelbrechenden Strahlteilerelements eine Winkel-Differenz in der oben angegebenen Größenordnung zu erzeugen, sollte der Fasenwinkel im oben angegebenen Wertebereich liegen. Beispielsweise kann durch ein Strahlteilerelement aus Quarz mit einem Fasenwinkel von 85° eine Winkel-Differenz von ca. 1 mrad erzeugt werden. An Stelle eines Strahlteilerelements, bei dem die Strahleintrittsfläche und die Strahlaustrittsfläche in einer Ebene gegeneinander geneigt sind, so dass der senkrecht zur Strahleintrittsfläche einfallende Laserstrahl und die beiden austretenden Teilstrahlen in dieser gemeinsamen Ebene liegen, ist es auch möglich, die Strahleintrittsfläche und die Strahlaustrittsfläche zusätzlich in einer zweiten Ebene zueinander zu neigen bzw. zu verkippen.

Bei einer weiteren Ausführungsform ist das doppelbrechende Strahlteilerelement derart ausgebildet und zur optischen Achse der Fokussieroptik ausgerichtet, dass die Fokusflächen des ersten und des zweiten aus der Strahlaustrittsfläche austretenden Teilstrahls denselben Abstand zur optischen Achse der Fokussieroptik aufweisen. Um dies zu ermöglichen, ist es typischerweise erforderlich, dass weder die Strahleintritts- noch die Strahlaustrittsfläche des doppelbrechenden Strahlteilers senkrecht zur optischen Achse der Fokussieroptik ausgerichtet sind. Die optische Achse der Fokussieroptik ist parallel zur Fokusebene ausgerichtet, die in der Regel parallel zur Werkstückoberfläche verläuft. Bei geeigneter Wahl des Winkels, den der Laserstrahl bzw. die Flächennormale der Strahleintrittsfläche zur optischen Achse der Fokussieroptik aufweist, sowie durch eine geeignete Wahl des Fasenwinkels des doppelbrechenden Strahlteilerelements können für ein gegebenes doppelbrechendes Material der ordentliche und der außerordentliche Teilstrahl symmetrisch in Bezug auf die optische Achse der Fokussieroptik abgelenkt werden, so dass die zugehörigen Fokusflächen in demselben Abstand zur optischen Achse der Fokussieroptik angeordnet sind. Im einfachsten Fall weisen die beiden Teilstrahlen, die auf die beiden Fokusflächen fokussiert werden, eine lineare Polarisationsrichtung auf und sind senkrecht zueinander polarisiert.

Bei einer weiteren Ausführungsform umfasst die Vorrichtung zusätzlich mindestens eine polarisationsverändernde, z.B. polarisationsdrehende Einrichtung, insbesondere eine λ/2-Platte oder einen optisch aktiven Polarisationsrotator, die zumindest einen Teilbereich, insbesondere die Hälfte, eines Strahlquerschnitts der aus dem doppelbrechenden Strahlteilerelement austretenden Teilstrahlen überdeckt. Aufgrund der geringen Winkel-Differenz der beiden aus der Strahlaustrittsfläche austretenden Teilstrahlen sind diese räumlich überlagert, d.h. es ist nicht ohne weiteres möglich, bei jedem einzelnen Teilstrahl die Polarisationsrichtung individuell zu verändern bzw. die Polarisationsrichtung individuell zu drehen. Zur Erzeugung einer gewünschten z.B. radialen Polarisation in der Fokusebene (s.u.) kann es aber günstig sein, in einem Teilbereich des Strahlquerschnitts der (räumlich überlagerten) Teilstrahlen die (lineare) Polarisationsrichtung zu drehen, beispielsweise um 90°, um 45°, etc.

Die polarisationsdrehende Einrichtung kann als eigenes optisches Element realisiert werden, beispielsweise als λ/2-Platte, die bei geeignet ausgerichteter optischer Achse eine Drehung der Polarisationsrichtung um beliebige Drehwinkel ermöglicht. Es ist aber auch möglich, die polarisationsdrehende Einrichtung in Form einer polarisationsdrehenden Beschichtung auszubilden, die beispielsweise auf das doppelbrechende Strahlteilerelement oder auf ein anderes in der Vorrichtung vorhandenes optisches Element, beispielsweise auf einen geometrischen Strahlteiler (s.u.), aufgebracht ist.

Die polarisationsdrehende Einrichtung dient typischerweise dazu, die lineare Polarisationsrichtung der Teilstrahlen zu drehen, so dass sich in der Fokusebene eine gewünschte (lineare) Polarisationsrichtung an den jeweiligen Fokusflächen einstellt. Es ist aber alternativ auch möglich, dass die polarisationsverändernde Einrichtung die typischerweise lineare Polarisation des aus der Strahlaustrittsfläche des doppelbrechenden Strahlteilerelements austretenden ordentlichen oder außerordentlichen Teilstrahls in eine elliptische Polarisation an den jeweiligen Fokusflächen umwandelt, z.B. mittels einer λ/4-Platte.

Bei einer weiteren Ausführungsform umfasst die Vorrichtung zusätzlich mindestens ein weiteres Strahlteilerelement zur Aufteilung der aus der Strahlaustrittsfläche des doppelbrechenden Strahlteilerelements austretenden Teilstrahlen auf mindestens vier Teilstrahlen. Für die Erzeugung von mehr als zwei Fokusflächen in der Fokusebene kann durch (mindestens) ein Strahlteilerelement, welches im Strahlengang nach dem doppelbrechenden Strahlteilerelement angeordnet ist, die Gesamtzahl der Teilstrahlen und somit auch die Gesamtzahl der Fokusflächen in der Fokusebene erhöht werden. Bei dem weiteren Strahlteilerelement kann es sich um einen geometrischen Strahlteiler, beispielsweise in Form einer Keilplatte oder dergleichen handeln, der in einem Bereich in den Strahlengang hinter dem doppelbrechenden Strahlteilerelement eingebracht werden kann, in dem die beiden Teilstrahlen sich räumlich überlagern.

Das Strahlteilerelement kann insbesondere nach der weiter oben beschriebenen polarisationsdrehenden Einrichtung, z.B. in Form einer λ/2-Platte, im Strahlengang der beiden Teilstrahlen angeordnet werden, welche an der Hälfte des Strahlquerschnitts der beiden Teilstrahlen die Polarisationsrichtung um 90° dreht. Die Strahlteilereinrichtung kann derart angeordnet werden, dass die Hälfte des Strahlquerschnitts, deren Polarisationsrichtung mittels der polarisationsdrehenden Einrichtung gedreht wurde, von der Hälfte des Strahlquerschnitts separiert wird, dessen Polarisationsrichtung nicht verändert wurde, so dass insgesamt vier Teilstrahlen entstehen.

Bei einer Weiterbildung umfasst die Vorrichtung zusätzlich eine weitere polarisationsdrehende Einrichtung, insbesondere eine weitere λ/2-Platte, die einen Strahlquerschnitt der vier Teilstrahlen vollständig überdeckt. Die weitere polarisationsdrehende Einrichtung kann die lineare Polarisationsrichtung der vier Teilstrahlen jeweils um 45° drehen. Dies ist günstig, um in Kombination mit der Drehung der Polarisationsrichtung mit Hilfe der weiter oben beschriebenen polarisationsdrehenden Einrichtung eine radiale Ausrichtung der linearen Polarisationsrichtung an den vier Fokusflächen zu erzeugen.

Bei einer weiteren Ausführungsform ist die Vorrichtung ausgebildet, mindestens zwei, insbesondere mindestens vier Teilstrahlen in die Fokusebene zu fokussieren, deren Fokusflächen eine radial zur optischen Achse der Fokussieroptik ausgerichtete lineare Polarisationsrichtung aufweisen. Eine solche radiale Polarisation der Teilstrahlen kann beispielsweise erzeugt werden, indem die Aufteilung der Teilstrahlen an dem weiteren Strahlteilerelement mit der/den weiter oben beschriebenen polarisationsdrehende(n) Einrichtung(en) kombiniert wird.

Bei einer weiteren Ausführungsform weist die Vorrichtung eine Mehrzahl von doppelbrechenden Strahlteilerelementen auf, die zur optischen Achse der Fokussieroptik versetzt angeordnet sind, wobei die Mehrzahl von doppelbrechenden Strahlteilerelementen bevorzugt ringförmig um die optische Achse der Fokussieroptik angeordnet ist. Für die Vergrößerung der Anzahl der Fokusflächen in der Fokusebene kann alternativ oder zusätzlich zur Verwendung von weiteren Strahlteilern (s.o.) eine Mehrzahl von doppelbrechenden Strahlteilerelementen verwendet werden. Für die Erzeugung einer radialen Polarisation der Teilstrahlen in der Fokusebene hat es sich als günstig erwiesen, eine Mehrzahl von doppelbrechenden Strahlteilerelementen ringförmig um die optische Achse der Fokussieroptik anzuordnen. Zu diesem Zweck können die doppelbrechenden Strahlteilerelemente in Form von keilförmigen Prismen ggf. zu einer ringförmigen Facettenplatte zusammengesetzt werden.

Bei einer Weiterbildung sind die Strahleintrittsflächen der zur optischen Achse der Fokussieroptik versetzt angeordneten doppelbrechenden Strahlteilerelemente zur optischen Achse der Fokussieroptik hin geneigt. Dies ist günstig, um beispielsweise bei einer ringförmigen Anordnung der doppelbrechenden Strahlteilerelemente einen der beiden Teilstrahlen nach innen, d.h. in Richtung auf die optische Achse der Fokussiereinrichtung, oder parallel dazu auszurichten. Bei einer solchen ringförmigen Anordnung der Strahlteilerelemente schneidet die Flächennormale der Strahleintrittsfläche eines jeweiligen doppelbrechenden Strahlteilerelements typischerweise die optische Achse der Fokussieroptik.

Bei einer weiteren Ausführungsform erzeugen die ringförmig angeordneten doppelbrechenden Strahlteilerelemente jeweils einen zweiten (typischerweise außerordentlichen) Teilstrahl, dessen Fokusfläche in der Fokusebene eine radial zur optischen Achse der Fokussieroptik ausgerichtete lineare Polarisationsrichtung aufweist, wobei erste (typischerweise ordentliche) Teilstrahlen, die von den doppelbrechenden Strahlteilerelementen erzeugt werden, auf sich überlappende Fokusflächen und insbesondere auf eine gemeinsame Fokusfläche fokussiert werden, die zentrisch zur optischen Achse der Fokussieroptik angeordnet ist. Die ringförmig angeordneten doppelbrechenden Strahlteilerelemente können beispielsweise zu einer doppelbrechenden Facettenplatte zusammengefügt sein. Die doppelbrechende Facettenplatte kann derart ausgelegt sein, dass die zweiten Teilstrahlen über die im Strahlweg nachfolgende Fokussieroptik in der Fokusebene auf einer zentralen, gemeinsamen Fokusfläche fokussiert werden. Aufgrund der Überlagerung von mehreren zweiten Teilstrahlen weist die zentrale Fokusfläche eine höhere Strahlungsintensität auf als die radial darum herum angeordneten Fokusflächen. Aufgrund der Überlagerung mehrerer Fokusflächen mit unterschiedlich ausgerichteter linearer Polarisationsrichtung weist die zentrale Fokusfläche eine (annähernd) zufällig ausgerichtete Polarisation auf.

Für die Erzeugung einer komplexeren, praktisch beliebigen Anordnung von Fokusflächen in der Fokusebene, beispielsweise eine Anordnung von Fokusflächen in mehreren Streifen, wie dies weiter unten beschrieben wird, ist es in der Regel nicht ausreichend, wenn die Strahleintrittsfläche des doppelbrechenden Strahlteilerelements nur unter einem radialen Winkel zur optischen Achse der Fokussieroptik ausgerichtet ist, d.h. wenn der eintretende Laserstrahl, die beiden austretenden Teilstrahlen und die optische Achse der Fokussieroptik in einer gemeinsamen Ebene liegen, wie dies typischerweise bei den weiter oben beschriebenen Beispielen der Fall war.

Bei einer weiteren Ausführungsform ist die Strahleintrittsfläche des doppelbrechenden Strahlteilerelements - und daher bei einem prismenförmigen doppelbrechenden Strahlteilerelement auch die Strahlaustrittsfläche - zusätzlich in azimutaler Richtung in Bezug auf die optische Achse der Fokussieroptik geneigt. Der in die Strahleintrittsfläche eintretende Laserstrahl weist in diesem Fall ebenfalls einen - zusätzlichen - azimutalen Winkelanteil auf, damit dieser senkrecht zur Strahleintrittsfläche auf den doppelbrechenden Strahlteiler auftrifft. Ein jeweiliger eintretender Laserstrahl trifft in diesem Fall somit unter zwei Winkeln verkippt zur optischen Achse der Fokussieroptik auf die Strahleintrittsfläche des doppelbrechenden Strahlteilerelements auf, d.h. der einfallende Laserstrahl, die beiden ausfallenden Teilstrahlen und die optische Achse der Fokussieroptik liegen nicht in einer gemeinsamen Ebene.

Für den Fall, dass eine Mehrzahl von doppelbrechenden Strahlteilerelementen in einer ringförmigen Anordnung, beispielsweise in der Art eines Facettenelements, angeordnet sind, können die einzelnen Facetten, genauer gesagt die Strahleintrittsflächen der jeweiligen doppelbrechenden Facetten, radial und zusätzlich azimutal zur optischen Achse der Fokussieroptik der Vorrichtung verkippt angeordnet sein. Auf diese Weise bewirken die Facetten keine rein radiale Verteilung der Fokusflächen in der Fokusebene. Die optische Achse der Fokussieroptik, der außerordentliche und der ordentliche Teilstrahl, die aus der jeweiligen Strahlaustrittsfläche austreten, und der eintretende Laserstrahl müssen also nicht in einer gemeinsamen Ebene liegen. Auf diese Weise können die Facetten eine zusätzliche azimutale Aufteilung der beiden Teilstrahlen bewirken, die für den ordentlichen und den außerordentlichen Teilstrahl unterschiedlich groß sein kann.

Hinter den doppelbrechenden Strahlteilerelementen, welche die Facetten des Facettenelements bilden, kann jeweils eine polarisationsdrehende Einrichtung z.B. in Form einer λ/2-Platte platziert werden oder die Facetten können eine polarisationsdrehende Beschichtung an der Strahlaustrittsfläche aufweisen, welche die Polarisation der beiden aus der jeweiligen Facette austretenden Teilstrahlen um einen beliebigen Winkel dreht. Die beiden Teilstrahlen bleiben dabei senkrecht zueinander polarisiert. Auf diese Weise erzeugt jede Facette in der Fokusebene zwei Fokusflächen mit senkrecht zueinander ausgerichteter Polarisationsrichtung, wobei die Fokusflächen praktisch beliebig in der Nähe der optischen Achse der Fokussieroptik angeordnet sein können. Insbesondere können sich zwei oder mehr der Fokusflächen ganz oder teilweise überlagern. Es versteht sich, dass in diesem Fall keine ringförmige Anordnung der doppelbrechenden Strahlteilerelemente bzw. Facetten um die optische Achse der Fokussieroptik erforderlich ist, sondern dass die Anordnung der Facetten des Facettenelements praktisch beliebig gewählt werden kann.

Bei einer weiteren Ausführungsform ist die Vorrichtung ausgebildet, in der Fokusebene mindestens zwei Streifen mit mehreren Fokusflächen zu erzeugen, wobei die Fokusflächen eines jeweiligen Streifens eine identische Polarisation, insbesondere eine identische Polarisationsrichtung, aufweisen und wobei die Polarisation, insbesondere die Polarisationsrichtungen, der Fokusflächen benachbarter Streifen sich voneinander unterscheidet.

Die Streifen mit den Fokusflächen erstrecken sich typischerweise im Wesentlichen entlang einer Vorschubrichtung, die während der Bearbeitung des Werkstücks durch eine Relativbewegung der Vorrichtung, beispielsweise des Laserbearbeitungskopfs, und des Werkstücks erzeugt wird. Die Streifen können parallel verlaufen, können aber auch unter verschiedenen Winkeln zur Vorschubrichtung ausgerichtet sein. Die Winkel, unter denen die lineare Polarisationsrichtung in den einzelnen Streifen relativ zur Vorschubrichtung ausgerichtet ist, nehmen vorzugsweise von innen, d.h. von einer in Vorschubrichtung verlaufenden Mittellinie der Einhüllenden der Fokusflächen, nach außen hin zu. Die Einhüllende der in den Streifen angeordneten Fokusflächen muss nicht zwingend kreisförmig sein, vielmehr kann die Einhüllende z.B. ein beliebiges Polygon bilden. Die den jeweiligen Fokusflächen zugeordneten Teilstrahlen müssen auch nicht zwingend eine lineare Polarisation aufweisen, vielmehr können diese ggf. auch elliptisch polarisiert sein, wobei das Längenverhältnis der Ellipsen-Hauptachsen zueinander größer als 10 sein sollte. Auch in diesem Fall kann sich die (elliptische) Polarisation der Fokusflächen in benachbarten Streifen voneinander unterscheiden.

Bei einer weiteren Ausführungsform umfasst die Vorrichtung eine Kollimationsoptik zur Kollimation eines der Vorrichtung zugeführten Laserstrahls, wobei die Kollimationsoptik in der Vorrichtung vor dem doppelbrechenden Strahlteilerelement angeordnet ist. Es hat sich als günstig erwiesen, wenn die Strahlformung durch das doppelbrechende Strahlteilerelement im kollimierten Strahlengang des der Vorrichtung zugeführten Laserstrahls stattfindet. Auf diese Weise ist es nicht erforderlich, die aus der Strahlaustrittsfläche des doppelbrechenden Strahlteilerelements austretenden Teilstrahlen lateral zu versetzen, sondern es genügt die Aufprägung von kleinen Winkelunterschieden in der Ausbreitungsrichtung der beiden Teilstrahlen.

Im einfachsten Fall bildet der Laserstrahl, welcher der Vorrichtung zugeführt wird, den (einen) Laserstrahl, der auf die Strahleintrittsfläche des (einen) doppelbrechenden Strahlteilerelements auftrifft. Wie weiter oben beschrieben wurde, hat es sich für die Annäherung einer gewünschten ortsabhängigen Verteilung der Polarisation in der Fokusebene, z.B. einer radialen Polarisationsverteilung, als günstig erwiesen, die Anzahl der Teilstrahlen bzw. der Fokusflächen weiter zu erhöhen, indem die Zahl der doppelbrechenden Strahlteilerelemente und somit die Zahl der auf diese auftreffenden Laserstrahlen weiter erhöht wird.

Bei einer Ausführungsform umfasst die Vorrichtung mindestens ein Strahlformungselement zur Formung eines Strahlprofils eines der Vorrichtung zugeführten Laserstrahls zur Bildung eines ringförmigen Laserstrahls (d.h. eines Laserstrahls mit ringförmigem Strahlprofil) oder zur Bildung von mindestens zwei Laserstrahlen, der/die auf mindestens zwei Strahleintrittsflächen von mindestens zwei doppelbrechenden Strahlteilerelementen auftreffen. Das Strahlformungselement kann insbesondere im kollimierten Strahlengang des zugeführten Laserstrahls angeordnet sein. Die Bildung der mindestens zwei Laserstrahlen kann auf unterschiedliche Weise realisiert werden. Typischerweise laufen die an dem Strahlformungselement gebildeten Laserstrahlen in radialer Richtung auf die optische Achse der Fokussieroptik zu bzw. von dieser weg, d.h. die Laserstrahlen sind unter einem Winkel in radialer Richtung ausgerichtet, welcher dem radialen Winkel entspricht, unter dem die Flächennormale der Strahleintrittsfläche eines jeweiligen doppelbrechenden Strahlteilerelements zur optischen Achse der Fokussieroptik ausgerichtet ist.

Bei einer Weiterbildung handelt es sich bei dem Strahlformungselement um (mindestens) einen geometrischen Strahlteiler, insbesondere um ein Facettenelement, zur Aufteilung des zugeführten Laserstrahls auf mehrere Eintrittsstrahlen oder um ein (kegelförmiges) Axicon zur Erzeugung des ringförmigen Laserstrahls. Das Axicon erzeugt aus dem typischerweise kollimierten, der Vorrichtung zugeführten Laserstrahl einen Laserstrahl mit ringförmigem Strahlprofil. Das Axicon ist typischerweise ausgebildet, einen divergent verlaufenden, kollimierten ringförmigen Laserstrahl zu erzeugen, d.h. der Laserstrahl verläuft typischerweise in radialer Richtung von der optischen Achse der Fokussieroptik nach außen. Der ringförmige Laserstrahl kann beispielsweise auf die weiter oben beschriebene doppelbrechende Facettenplatte auftreffen, die aus doppelbrechenden Strahlteilerelementen zusammengesetzt ist. Ein jeweiliger in Umfangsrichtung verlaufender Abschnitt des ringförmigen Laserstrahls bildet in diesem Fall einen auf eine jeweilige Strahleintrittsfläche auftreffenden Laserstrahl, d.h. der ringförmige Laserstrahl wird in diesem Fall erst an den Kanten benachbarter Strahlteilerelemente in einen jeweiligen auftreffenden Laserstrahl aufgeteilt.

Bei dem geometrischen Strahlteiler in Form des Facettenelements kann es sich beispielsweise um eine pyramidenförmige Platte handeln, deren plane Grundfläche dem typischerweise kollimiert zugeführten Laserstrahl zugewandt ist und an deren Pyramidenflächen ein jeweiliger Eintrittsstrahl gebildet wird, der in Bezug auf die optische Achse der Fokussieroptik radial nach innen verläuft. In diesem Fall verkippt jede Pyramidenfläche der Facettenplatte einen Anteil des Strahlprofils des parallel zur optischen Achse der Fokussieroptik zugeführten Laserstrahls in Richtung der optischen Achse der Fokussieroptik oder von dieser weg, d.h. die Strahlrichtung des an der Pyramidenfläche gebildeten Laserstrahls und die optische Achse der Fokussieroptik bilden eine Ebene. Die resultierenden Laserstrahlen sind beim Auftreffen auf die doppelbrechende Facettenplatte also radial räumlich versetzt (Ortsversatz).

Durch eine zusätzliche azimutale Verkippung der Pyramidenflächen der pyramidenförmigen Facettenplatte kann ein zusätzlicher azimutaler Winkelanteil der Teilstrahlen beim Auftreffen der Laserstrahlen auf die doppelbrechenden Facettenelemente der Facettenplatte erreicht werden, um auf diese Weise eine zusätzliche azimutale Auslenkung der senkrecht zueinander polarisierten Teilstrahlen zu ermöglichen, die aus der Strahlaustrittsfläche einer jeweiligen doppelbrechenden Facette austreten. Da in diesem Fall die Pyramidenflächen der als geometrischer Strahlteiler dienenden pyramidenförmigen Facettenplatte nicht mehr stetig aneinander grenzen, kann es in diesem Fall jedoch zu nachteiligen Beugungseffekten kommen.

Bei einer alternativen Ausführungsform ist das Strahlformungselement als diffraktives optisches Element (DOE) ausgebildet. Mit Hilfe eines diffraktiven optischen Elements kann auf vorteilhafte Weise aus einem zugeführten Laserstrahl eine Mehrzahl von Laserstrahlen erzeugt werden, die sowohl in radialer Richtung als auch in azimutaler Richtung unter einem Winkel zur optischen Achse der Fokussieroptik ausgerichtet sind. Das diffraktive optische Element kann beispielsweise als Planelement ausgebildet sein, das eine beugende Oberflächenstruktur, z.B. ein Sägezahnprofil, aufweist. Die Oberflächenstruktur bzw. das diffraktive optische Element kann facettiert ausgebildet sein, wobei eine jeweilige Facette zur Erzeugung eines Laserstrahls dient, der auf ein jeweiliges doppelbrechendes Strahlteilerelement auftrifft.

Der Laserbearbeitungskopf kann diese typischerweise in mindestens einer Raumrichtung, in der Regel in zwei oder drei Raumrichtungen, über das Werkstück bewegt werden, um den Laserstrahl bzw. die Mehrzahl von Fokusflächen während der Bearbeitung des Werkstücks auf die Fokusebene auszurichten, die sich in der Nähe der Oberseite des beispielsweise plattenförmigen Werkstücks befindet. Alternativ oder ergänzend ist auch eine Bewegung des Werkstücks möglich. Bei der Bearbeitung erfolgt eine Bewegung des Laserbearbeitungskopfs und des Werkstücks relativ zueinander entlang einer Bewegungsbahn mit einer ortsabhängig bzw. zeitlich veränderlichen Vorschubrichtung.

Aus dem zufällig polarisierten Laserstrahl kann auf die weiter oben beschriebene Weise eine Mehrzahl von Laserstrahlen und mit Hilfe des/der doppelbrechenden Strahlteilerelemente eine Mehrzahl von Teilstrahlen mit einer nahezu beliebigen Anordnung von Fokusflächen in der Fokusebene erzeugt werden, wobei auch die Polarisationsrichtungen der Teilstrahlen an den einzelnen Fokusflächen praktisch beliebig ausgerichtet werden können.

Ein weiterer Aspekt der Erfindung betrifft ein Verfahren zum Bearbeiten, insbesondere zum Laserschneiden, eines Werkstücks mittels einer Laserbearbeitungsmaschine wie sie weiter oben beschrieben ist, umfassend: Bewegen des Laserbearbeitungskopfs und des Werkstücks relativ zueinander entlang einer Vorschubrichtung, sowie Fokussieren der mindestens zwei Teilstrahlen auf die mindestens zwei Fokusflächen in der Fokusebene im Bereich des Werkstücks, wobei die mindestens zwei Fokusflächen bevorzugt zumindest teilweise in Vorschubrichtung zueinander versetzt sind. Die Fokusebene ist im Bereich des (plattenförmigen) Werkstücks gebildet, d.h. diese befindet sich an der Oberseite des Werkstücks oder ist in einem geringen Abstand, typischerweise von wenigen Millimetern, zur Oberseite des Werkstücks angeordnet. Es versteht sich, dass nicht nur zwei Fokusflächen in der Fokusebene erzeugt werden können, sondern dass es in der Regel günstig ist, eine größere Anzahl von Fokusflächen in der Fokusebene zu erzeugen, um eine gewünschte Polarisationsverteilung in der Fokusebene zu realisieren.

Ein weiterer Aspekt der Erfindung betrifft ein Verfahren zum Bearbeiten, bevorzugt zum Laserschneiden eines Werkstücks, insbesondere mittels eines Laserbearbeitungskopfs wie er oben beschrieben ist, umfassend: Bewegen eines Laserbearbeitungskopfs, dem ein (typischerweise zufällig polarisierter bzw. unpolarisierter) Laserstrahl zugeführt wird, und des Werkstücks relativ zueinander entlang einer Vorschubrichtung, sowie Fokussieren vom mehreren linear oder elliptisch polarisierten Teilstrahlen des zugeführten Laserstrahls auf mehrere Fokusflächen in einer Fokusebene, die im Bereich des Werkstücks oberhalb, innerhalb oder unterhalb des Werkstücks gebildet ist, wobei entweder beim Fokussieren der Teilstrahlen in der Fokusebene mindestens zwei Streifen mit mehreren Fokusflächen erzeugt werden, die sich entlang der Vorschubrichtung erstrecken, wobei die Fokusflächen in einem jeweiligen Streifen eine identische Polarisationsrichtung aufweisen und wobei die Fokusflächen in benachbarten Streifen eine jeweils unterschiedliche Polarisationsrichtung aufweisen, oder wobei beim Fokussieren der Teilstrahlen in der Fokusebene eine Mehrzahl von ringförmig um die optische Achse einer Fokussieroptik des Laserbearbeitungskopfs angeordneten Fokusflächen erzeugt wird, wobei die ringförmig angeordneten Fokusflächen eine radial zur optischen Achse ausgerichtete lineare oder elliptische Polarisationsrichtung aufweisen, und wobei eine zentrisch zur optischen Achse angeordnete Fokusfläche bevorzugt durch eine teilweise oder vollständige räumliche Überlagerung von mindestens zwei der Teilstrahlen eine höhere Strahlungsintensität aufweist als eine jeweilige Fokusfläche der ringförmig angeordneten Fokusflächen.

Bei der ersten Variante des Verfahrens wird eine streifenförmige Anordnung der Fokusflächen entlang der Vorschubrichtung erzeugt. Ein Verfahren zum Laserschneiden mit einem durch mehrere Strahlstreifen mit jeweils unterschiedlicher Polarisationsrichtung gebildeten streifenpolarisierten Laserstrahl wurde in der EP 2 580 019 B1 beschrieben und hat sich für das Laserschneiden als günstig erwiesen. Im Gegensatz zu dem in der EP 2 580 019 B1 beschriebenen Verfahren werden die Streifen mit der unterschiedlichen Ausrichtung der linearen Polarisationsrichtung beim erfindungsgemäßen Verfahren nicht aus einem bereits linear polarisierten Laserstrahl durch einen Streifenpolarisator erzeugt, sondern es wird aus einem typischerweise zufällig polarisierten bzw. unpolarisierten Laserstrahl eine Mehrzahl von Teilstrahlen bzw. von Fokusflächen mit jeweils geeignet (individuell) ausgerichteter linearer bzw. elliptischer Polarisationsrichtung erzeugt.

Bei der zweiten Variante des Verfahrens wird eine radiale Verteilung der linearen Polarisationsrichtungen der Fokusflächen erzeugt, was sich ebenfalls als günstig für das Laserschneiden herausgestellt hat, wie beispielsweise in der EP 2 722 127 B1 beschrieben ist. Dort werden zur Erzeugung der radialen Verteilung der Polarisationsrichtungen jedoch mehrere polarisationserhaltende optische Fasern benötigt, während bei dem erfindungsgemäßen Verfahren lediglich ein einziges Lichtleitkabel bzw. eine einzige optische Faser benötigt wird, die dem Laserbearbeitungskopf den zufällig polarisierten Laserstrahl zuführt.

Zudem weist beim erfindungsgemäßen Verfahren die zentrisch zur optischen Achse angeordnete Fokusfläche eine größere Strahlungsintensität auf als eine jeweilige ringförmig um die zentrale Fokusfläche angeordnete Fokusfläche. Wie weiter oben beschrieben wurde, kann die erhöhte Strahlungsintensität dadurch erreicht werden, dass mindestens zwei der Teilstrahlen an der zentralen Fokusfläche zumindest teilweise überlagert werden. Insbesondere kann für jeden Teilstrahl, der auf eine der ringförmig angeordneten Fokusflächen fokussiert wird, ein Teilstrahl auf die zentrale Fokusfläche fokussiert werden. Auf diese Weise kann an der zentralen Fokusfläche eine (annähernd) zufällige Polarisation erzeugt werden, was sich in Kombination mit der radialen Ausrichtung der Polarisationsrichtungen der ringförmig angeordneten Fokusflächen ebenfalls als günstig für das Laserschneiden erwiesen hat. Grundsätzlich kann durch die hier beschriebene Polarisationsformung z.B. einer Mehrzahl von linear polarisierten Fokusflächen auch die Intensitätsverteilung der Fokusflächen in der Fokusebene praktisch beliebig eingestellt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Laserbearbeitungsmaschine mit einem Laserbearbeitungskopf, der zwei Teilstrahlen eines Laserstrahls auf zwei Fokusflächen in einer Fokusebene fokussiert,
- Fig. 2: eine Darstellung eines doppelbrechenden Strahlteilerelements des Laserbearbeitungskopfs von Fig. 1, welches in Bezug auf eine optische Achse unter einem Winkel ausgerichtet ist, um die beiden Teilstrahlen in demselben Abstand von der optischen Achse zu fokussieren,
- Fig. 3a: eine Darstellung eines keilförmigen doppelbrechenden Strahlteilerelements aus Quarz, welches aus einem eintretenden Laserstrahl zwei unter einem Differenz-Winkel austretende Teilstrahlen erzeugt,
- Fig. 3b: eine Darstellung des Differenz-Winkels in Abhängigkeit von einem Fasenwinkel, den eine Strahlaustrittsfläche des Strahlteilerelements von Fig. 3a zu einer Flächennormalen der Strahleintrittsfläche aufweist,
- Fig. 4: eine Darstellung des Strahlengangs in dem Laserbearbeitungskopf von Fig. 1, welcher das in Fig. 2 dargestellte doppelbrechende Strahlteilerelement aufweist,
- Fig. 5: eine Darstellung analog Fig. 4 mit einem weiteren, nicht doppelbrechenden Strahlteilerelement zur Aufteilung der beiden Teilstrahlen auf vier Teilstrahlen sowie mit polarisationsdrehenden Einrichtungen zur Erzeugung einer radialen Polarisation der vier Teilstrahlen in der Fokusebene,
- Fig. 6a,b: eine Schnittdarstellung und eine dreidimensionale Darstellung einer Anordnung mit einem geometrischen Strahlteiler und einer doppelbrechenden Facettenplatte mit sechs ringförmig um die optische Achse angeordneten doppelbrechenden Strahlteilerelementen,
- Fig. 7: eine Darstellung der Fokusflächen der Teilstrahlen, die an der doppelbrechenden Facettenplatte von Fig. 6b erzeugt werden, in einer Fokusebene,
- Fig. 8a,b: Darstellungen von diffraktiven optischen Elementen mit sechs bzw. mit vier Facetten zur Erzeugung von sechs bzw. vier Laserstrahlen, die sowohl radial als auch azimutal unter einem Winkel zu einer optischen Achse einer Fokussieroptik ausgerichtet sind,
- Fig. 9: eine Darstellung der Fokusflächen von acht Teilstrahlen, die mittels eines doppelbrechenden Facettenelements mit vier doppelbrechenden Strahlteilerelementen aus den vier Laserstrahlen von Fig. 8b erzeugt wurden, sowie
- Fig. 10a,b: Darstellungen einer Mehrzahl von Fokusflächen in einer Fokusebene, die in fünf Streifen angeordnet sind, die sich jeweils entlang einer Vorschubrichtung erstrecken.

In der folgenden Beschreibung der Zeichnungen werden für gleiche bzw. funktionsgleiche Bauteile identische Bezugszeichen verwendet.

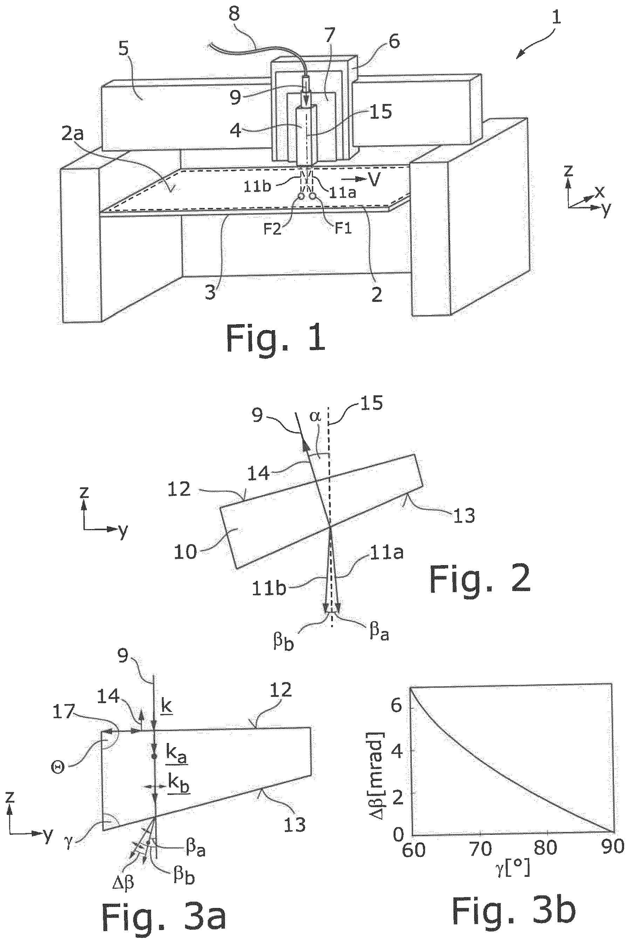

**Fig. 1** zeigt einen beispielhaften Aufbau einer Laserbearbeitungsmaschine **1** in Form einer Laser-Flachbettmaschine zur schneidenden Bearbeitung eines in Fig. 1 gestrichelt dargestellten plattenförmigen Werkstücks **2**. Das Werkstück 2 liegt bei der Bearbeitung auf einer Werkstücklagerung in Form eines Werkstücktisches **3** auf, der eine XY-Ebene eines XYZ-Koordinatensystems definiert. Der Werkstücktisch 3 weist eine sich in X-Richtung erstreckende Längsseite sowie eine sich in Y-Richtung erstreckende Querseite auf.

Bei der Bearbeitung des auf dem Werkstücktisch 3 ruhenden Werkstücks 2 wird ein Laserbearbeitungskopf in Form eines Laserschneidkopfs **4** in X-Richtung und in Y-Richtung über den Werkstücktisch 3 bewegt. Als erste Bewegungseinrichtung für die Bewegung des Laserschneidkopfs 4 in X-Richtung dient ein Portal **5**, an dem der Laserschneidkopf 4 angebracht ist. Das Portal 5 ist an zwei seitlich zum Werkstücktisch 3 angebrachten Führungen gesteuert angetrieben in X-Richtung verschiebbar. Als zweite Bewegungseinrichtung für die Bewegung des Laserschneidkopfs 4 in Y-Richtung dient ein Schlitten **6**, der an dem Portal 5 geführt ist und der entlang des Portals 5 gesteuert in Y-Richtung verfahrbar ist. Der Laserschneidkopf 4 ist an einem plattenförmigen Trägerbauteil **7** in Form eines weiteren Schlittens befestigt, der an dem in Y-Richtung bewegbaren Schlitten 6 angebracht ist und gesteuert in Z-Richtung verschoben werden kann, um den Abstand zwischen dem Laserschneidkopf 4 und dem Werkstück 2 in Z-Richtung zu verändern.

Wie in Fig. 1 ebenfalls zu erkennen ist, wird dem Laserschneidkopf 4 ein in einer optischen Faser eines Lichtleitkabels **8** geführter Laserstrahl **9** von einer nicht bildlich dargestellten Laserquelle zugeführt. Bei der Laserquelle handelt es sich im gezeigten Beispiel um einen Festkörperlaser. Das Lichtleitkabel 8 ist nicht polarisationserhaltend, so dass der in den Laserschneidkopf 4 eintretende Laserstrahl 9 zufällig polarisiert oder unpolarisiert ist.

Der dem Laserschneidkopf 4 zugeführte Laserstrahl 9 wird an einem in **Fig. 2** dargestellten doppelbrechenden Strahlteilerelement **10** auf zwei Teilstrahlen **11a**, **11b** aufgeteilt. Die beiden Teilstrahlen 11a, 11b werden mittels einer in Fig. 1 nicht bildlich dargestellten Fokussieroptik des Laserschneidkopfs 4 auf zwei Fokusflächen **F1, F2** (Fokus-Spots) in einer Fokusebene 2a fokussiert, die bei dem in Fig. 1 gezeigten Beispiel der Oberseite des Werkstücks 2 entspricht. Die beiden Teilstrahlen 11a, 11b sind jeweils linear polarisiert, wobei die Polarisationsrichtungen der beiden Teilstrahlen 11a, 11b senkrecht zueinander ausgerichtet sind. Ist der Laserschneidkopf 4 oder sind die darin angeordneten optischen Elemente drehbar gelagert, so kann die Ausrichtung der beiden Teilstrahlen 11a, 11b an die Schneidrichtung angepasst werden.

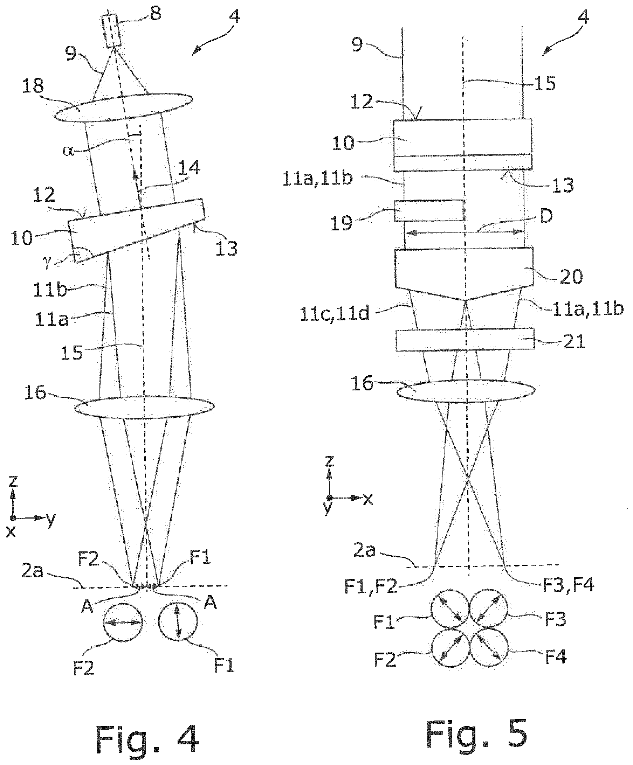

Das Fig. 2 dargestellte keilförmige doppelbrechende Strahlteilerelement weist eine plane Strahleintrittsfläche **12** und eine plane Strahlaustrittsfläche **13** auf, die nicht parallel zur planen Strahleintrittsfläche 12 ausgerichtet ist. Der dem Laserschneidkopf 4 zugeführte Laserstrahl 9 trifft senkrecht auf die Strahleintrittsfläche 12 auf, d.h. der Laserstrahl 9 verläuft parallel zu einer Flächennormalen **14** der Strahleintrittsfläche 12. Das doppelbrechende Strahlteilerelement 10, genauer gesagt dessen Strahleintrittsfläche 12, ist unter einem Winkel **α** zu einer optischen Achse **15** des Laserschneidkopfs 4 ausgerichtet, die der in vertikaler Richtung (Z-Richtung) verlaufenden optischen Achse 15 einer in **Fig. 4** dargestellten Fokussieroptik **16** des Laserschneidkopfs 4 entspricht.

Um zu gewährleisten, dass der Laserstahl 9 senkrecht auf die Strahleintrittsfläche 12 auftrifft, wird dieser bei dem in Fig. 4 schematisch dargestellten Laserschneidkopf 4 schräg zugeführt, und zwar unter dem Winkel α zur optischen Achse 15 der Fokussieroptik 16, unter dem auch die Flächennormale 14 der Strahleintrittsfläche 12 ausgerichtet ist. Es versteht sich, dass der dem Laserschneidkopf 4 zugeführte Laserstrahl 9 alternativ mit Hilfe einer (nicht gezeigten) Umlenkeinrichtung, z.B. mittels eines oder mehrerer Spiegel, innerhalb des Laserschneidkopfs 4 unter dem Winkel α zur optischen Achse 15 der Fokussieroptik 16 ausgerichtet werden kann. Wie in Fig. 2 und in Fig. 4 zu erkennen ist, ist die Strahlaustrittsfläche 13 des doppelbrechenden Strahlteilerelements 10 ebenfalls geneigt zur optischen Achse 15 des Laserschneidkopfs 4 bzw. der Fokussieroptik 16 ausgerichtet.

Wie in Fig. 2 ebenfalls zu erkennen ist, treten aus der Strahlaustrittsfläche 13 des doppelbrechenden Strahlteilerelements 10 die beiden Teilstrahlen 11a, 11b an ein- und derselben Stelle, aber unter zwei unterschiedlichen Austrittswinkeln **βₐ**, **β_{b}** aus. Es hat sich als günstig erwiesen, wenn ein Differenz-Winkel **Δβ** = | βₐ - β_{b},| den die beiden Teilstrahlen 11a, 11b an der Strahlaustrittsfläche 13 des doppelbrechenden Strahlteilerelements 10 miteinander einschließen, möglichst groß ist.

Um den Zusammenhang zwischen dem Differenz-Winkel Δβ und der Auslegung bzw. der Geometrie des doppelbrechenden Strahlteilerelements 10 zu verstehen, wird nachfolgend die Funktionsweise des doppelbrechenden Strahlteilerelements 10 anhand von Fig. 3a,b näher erläutert: Der zufällig polarisierte Laserstrahl 9 mit Wellenvektor k tritt an der Strahleintrittsfläche 12 in das doppelbrechende Strahlteilerelement 10 ein und wird in die beiden senkrecht zueinander polarisierten Teilstrahlen 11a, 11b aufgespalten. Die Wellenvektoren kₐ, k_{b} der beiden Teilstrahlen 11a, 11b weisen bei dem in Fig. 3a gezeigten Beispiel einen unterschiedlichen Betrag auf, was dazu führt, dass die beiden Teilstrahlen 11a, 11b beim Austritt aus der Strahlaustrittsfläche 13 unter zwei unterschiedlichen Austrittswinkeln βₐ, β_{b} austreten. Die Ausrichtung einer optischen Achse **17** des doppelbrechenden Materials des Strahlteilerelements 10, bei dem es sich im gezeigten Beispiel um einen Quarz-Kristall handelt, verläuft parallel zur Strahleintrittsfläche 12, d.h. senkrecht zur Flächennormalen 14 der Strahleintrittsfläche 12. Der Winkel θ, unter dem die optische Achse 17des Quarz-Kristalls zur Strahlrichtung des eintretenden Laserstrahls 9 ausgerichtet ist, liegt somit bei 90°. In diesem Spezialfall liegen die optische Achse 17 des Quarz-Kristalls und die Flächennormale der Strahlaustrittsfläche 13 in einer gemeinsamen Ebene.

Für die in Fig. 3a gezeigte Ausrichtung der optischen Achse 17 des Quarz-Kristalls (d.h. θ = 90°) zeigt Fig. 3b den Differenz-Winkel Δβ zwischen den beiden Teilstrahlen 11a, 11b in Abhängigkeit von einem Fasenwinkel **γ**, unter dem die Strahlaustrittsfläche 13 zur Normalenrichtung 14 der Strahleintrittsfläche 12 ausgerichtet ist. Anhand von Fig. 3b ist erkennbar, dass der Differenz-Winkel Δβ zwischen den beiden Teilstrahlen 11a, 11b sehr klein ist und ca. 7 mrad nicht überschreitet. Im gezeigten Beispiel wurde ein Fasenwinkel γ von 85° gewählt, der einem Differenz-Winkel Δβ von ca. 1 mrad entspricht. Es versteht sich, dass auch andere Fasenwinkel γ gewählt werden können, die typischerweise zwischen ca. 60° und ca. 88° liegen. Es versteht sich ebenfalls, dass bei der Verwendung von anderen doppelbrechenden Kristallen zur Herstellung des doppelbrechenden Strahlteilerelements 10 Fasenwinkel γ gewählt werden können, die außerhalb des in Fig. 3b gezeigten Wertebereichs liegen.

Wie in Fig. 3a zu erkennen ist, treten die beiden senkrecht zueinander polarisierten Teilstrahlen 11a, 11b (ordentlicher bzw. außerordentlicher Strahl) räumlich überlagert unter den beiden unterschiedlichen Austrittswinkeln βₐ, β_{b} aus dem doppelbrechenden Strahlteilerelement 10 aus. Die Austrittswinkel βₐ, β_{b}, die die beiden Teilstrahlen 11a, 11b jeweils zum eintretenden Laserstrahl 9 aufweisen, sind dabei deutlich größer als die (schematisch größer gezeichnete) Winkeldifferenz Δβ zwischen den beiden Teilstrahlen 11a, 11b. Um die gewünschte Strahlformung bzw. die gewünschte Anordnung der Fokusflächen F1, F2 der linear polarisierten Teilstrahlen 11a, 11b auf dem Werkstück 2 bzw. in der Fokusebene 2a zu erzeugen, wird daher wie in Fig. 4 gezeigt ist das als doppelbrechende Keilplatte ausgebildete Strahlteilerelement 10, genauer gesagt dessen Strahleintrittsfläche 12, unter einem Winkel α ungleich 90°, beispielsweise zwischen ca. 10 mrad und ca. 500 mrad zur optischen Achse 15 der Fokussieroptik 16 in dem Laserschneidkopf 4 ausgerichtet.

Wie in Fig. 4 ebenfalls zu erkennen ist, wird der dem Laserschneidkopf 4 zugeführte Laserstrahl 9 an einer Kollimationsoptik in Form einer Kollimationslinse **18** kollimiert, bevor dieser auf das doppelbrechende Strahlteilerelement 10 auftrifft.

Bei dem in Fig. 4 gezeigten Laserschneidkopf 4 sind der Winkel α, unter dem die Flächennormale 14 der Strahleintrittsfläche 12 des doppelbrechenden Strahlteilerelements 10 zur optischen Achse 15 der Fokussieroptik 16 ausgerichtet ist, der Fasenwinkel γ sowie das doppelbrechende Material des doppelbrechenden Strahlteilerelements 10 derart aufeinander abgestimmt, dass die Fokusflächen F1, F2 der beiden aus der Strahlaustrittsfläche 13 austretenden Teilstrahlen 11a, 11b in der YZ-Ebene jeweils denselben Abstand A zur optischen Achse 15 der Fokussieroptik 16 aufweisen. Wie in Fig. 4 in einer Draufsicht auf die beiden Fokusflächen F1, F2 zu erkennen ist, sind die beiden Teilstrahlen 11a, 11b linear und jeweils senkrecht zueinander polarisiert.

Für das Laserschneiden kann es vorteilhaft sein, die Anzahl der Fokusflächen F1, F2 zu erhöhen, beispielsweise auf vier Fokusflächen **F1-F4,** um eine radiale Polarisationsverteilung in der Fokusebene 2a anzunähern, wie dies nachfolgend anhand eines in **Fig. 5** schematisch gezeigten Laserschneidkopfs 4 beschrieben ist. Der Laserschneidkopf 4 von Fig. 5 ist grundsätzlich wie der Laserschneidkopf 4 von Fig. 4 ausgebildet, d.h. dieser weist insbesondere die keilförmige Strahlteilereinrichtung 10 auf. Der Strahlengang des Laserschneidkopfs 4 ist in Fig. 5 aber in der XZ-Ebene dargestellt, weshalb die schräge Ausrichtung der Strahleintrittsfläche 12 und der Strahlaustrittsfläche 13 des doppelbrechenden Strahlteilerelements 10 in Fig. 5 nicht zu erkennen sind.

Bei dem in Fig. 5 dargestellten Laserschneidkopf 4 treten die beiden Teilstrahlen 11a, 11b überlagert aus dem doppelbrechenden Strahlteilerelement 10 aus. Eine polarisationsdrehende Einrichtung **19** in Form einer λ/2-Platte ist im Strahlweg nach dem doppelbrechenden Strahlteilerelement 10 angeordnet und überdeckt die Hälfte eines Strahlquerschnitts D der beiden räumlich überlagerten Teilstrahlen 11a, 11b. Die λ/2-Platte 19 ist derart orientiert, dass diese eine Drehung der linearen Polarisationsrichtung der beiden Teilstrahlen 11a, 11b um 90° bewirkt.

Mit Hilfe eines im Strahlweg nachfolgenden weiteren (nicht doppelbrechenden) Strahlteilerelements **20** in Form einer Keilplatte mit zwei Facettenflächen, die einen Doppelkeil bilden, werden die beiden Teilstrahlen 11a, 11b in der XZ-Ebene, d.h. senkrecht zur in Fig. 4 gezeigten YZ-Ebene, in vier Teilstrahlen **11a-d** aufgeteilt. Im Strahlengang nach dem weiteren Strahlteilerelement 20 ist eine weitere polarisationsdrehende Einrichtung **21** in Form einer weiteren λ/2-Platte angeordnet, welche den gesamten Strahlquerschnitt der vier Teilstrahlen 11a-d überdeckt. Die weitere λ/2-Platte 21, genauer gesagt deren optische Achse, ist so ausgerichtet, dass diese die Polarisationsrichtung der vier Teilstrahlen 11a-d jeweils um +/- 45° dreht. Die Fokussieroptik 16 fokussiert die vier Teilstrahlen 11a-d auf vier Fokusflächen F1-F4 in der Fokusebene 2a. Die linearen Polarisationsrichtungen der vier Teilstrahlen 11a-d an den Fokusflächen F1-F4 sind jeweils radial zur optischen Achse 15 der Fokussieroptik 16 ausgerichtet. Der in Fig. 5 dargestellte Laserschneidkopf 4 ermöglicht somit die Erzeugung einer näherungsweise radialen Polarisationsverteilung in der Fokusebene 2a.

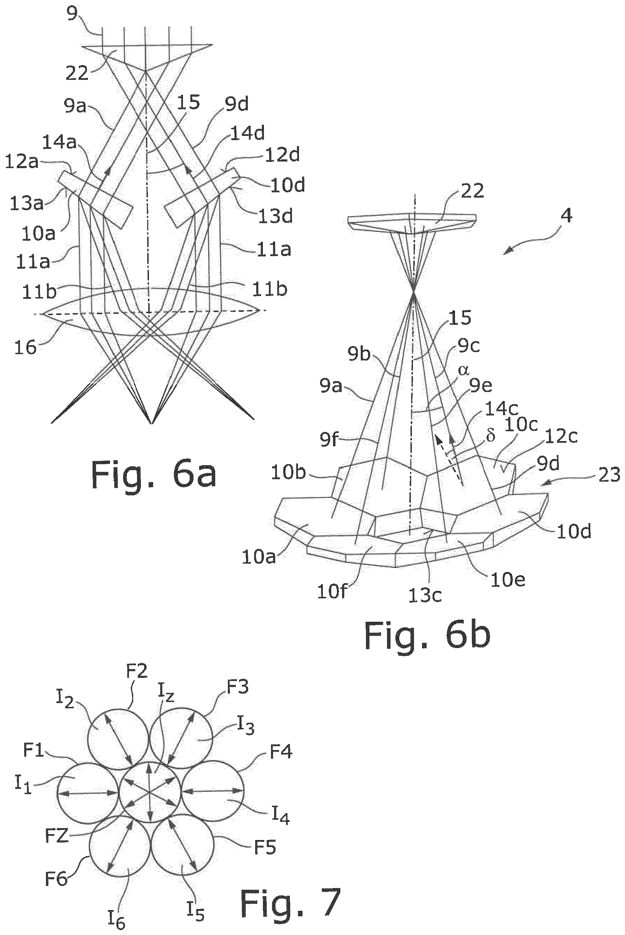

Fig. 6a,b zeigen einen Abschnitt eines Strahlengangs eines Laserschneidkopfs 4, der zur Erzeugung von sieben in **Fig. 7** dargestellten Fokusflächen **F1-F6**, **FZ** in der Fokusebene 2a sechs doppelbrechende Strahlteilerelemente 10a-f aufweist. Der dem Laserschneidkopf 4 zugeführte, kollimierte Laserstrahl 9 wird hierbei zunächst an einem Strahlformungselement **22**, das als geometrischer Strahlteiler in Form einer pyramidenförmigen Facettenplatte ausgebildet ist, in sechs Laserstrahlen **9a-f** aufgeteilt, die auf jeweils eines der sechs doppelbrechenden Strahlteilerelemente 10a-f auftreffen. Die sechs Laserstrahlen 9a-d werden jeweils von einer von sechs der Pyramidenflächen des Strahlformungselements 22 zur optischen Achse 15 hin umgelenkt, so dass diese unter einem Winkel α gegenüber der optischen Achse 15 auf eine jeweilige Strahleintrittsfläche 12a-f der doppelbrechenden Strahlteilerelemente 10a-f auftreffen, da diese zur optischen Achse 15 der Fokussieroptik 16 versetzt angeordnet sind. Im gezeigten Beispiel ist sind die sechs doppelbrechenden Strahlteilerelemente 10a-d ringförmig um die optische Achse 15 angeordnet. Die sechs Strahlteilerelemente 10a-d sind an ihren Kanten zusammengefügt und bilden eine ringförmige doppelbrechende Facettenplatte **23**.

Die sechs Strahlteilerelemene 10a-f sind wie das in Zusammenhang mit Fig. 2 beschriebene Strahlteilerelement 10 ausgebildet, d.h. als keilförmige Prismen. Wie in Fig. 6a anhand des ersten und des vierten Strahlteilerelements 10a, 10d zu erkennen ist, sind deren Strahleintrittsflächen 12a, 12d senkrecht zum jeweiligen einfallenden Laserstrahl 9a, 9d ausgerichtet. Die Flächennormalen 14a, 14d der beiden Strahleintrittsflächen 12a, 12d sind zur optischen Achse 15 hin geneigt und schneiden diese im Strahlweg zwischen dem Strahlformungselement 22 und den doppelbrechenden Strahlteilerelementen 10a, 10d, d.h. die Strahleintrittsflächen 12a, 12d sind zur optischen Achse 15 des Laserschneidkopfs 4 hin verkippt bzw. geneigt.

Wie in Fig. 6a für das erste und das vierte doppelbrechende Strahlteilerelement 10a, 10d dargestellt ist, erzeugen die ringförmig angeordneten doppelbrechenden Strahlteilerelemente 10a-d jeweils einen ersten Teilstrahl 11a und einen zweiten Teilstrahl 11b. Der erste Teilstrahl 11a wird hierbei jeweils radial weiter innen auf die Fokusebene 2a fokussiert als der zweite Teilstrahl 11b. Bei dem in Fig. 6a gezeigten Beispiel verlaufen die ersten Teilstrahlen 11a nach dem doppelbrechenden Strahlteilerelement 10a, 10d parallel zur optischen Achse 15, dies ist aber nicht zwingend erforderlich. Wie in Fig. 7 zu erkennen ist, weisen die sechs zweiten Teilstrahlen 11b bzw. die diesen zugeordneten sechs Fokusflächen F1-F6 in der Fokusebene 2a jeweils eine lineare Polarisationsrichtung auf, die jeweils in radialer Richtung zur optischen Achse 15 ausgerichtet ist.

Die senkrecht zur linearen Polarisationsrichtung der zweiten Teilstrahlen 11b polarisierten ersten Teilstrahlen 11a werden von der Fokussieroptik 16 auf eine gemeinsame, zentrisch zur optischen Achse 15 ausgerichtete Fokusfläche FZ fokussiert. Die Polarisation der zentralen Fokusfläche FZ stellt eine Überlagerung von mehreren linearen Polarisationsrichtungen der jeweiligen ersten Teilstrahlen 11a dar, so dass die Polarisation an der zentralen Fokusfläche FZ annähernd einer zufälligen Polarisation entspricht. Aufgrund der Überlagerung von insgesamt sechs ersten Teilstrahlen 11a an der zentralen Fokusfläche FZ ist die Strahlungsintensität Iz dort größer als die Strahlungsintensität I₁ bis I₆ an einer jeweiligen radial außen liegenden Fokusfläche F1-F6. Die Überlagerung der ersten Teilstrahlen 11a kann auch nur teilweise erfolgen, so dass die zentrale Fokusfläche FZ einen größeren Durchmesser und eine weniger hohe, ggf. unregelmäßige Strahlungsintensität I_{z} aufweist.

An Stelle des weiter oben beschriebenen Strahlformungselements 22 in Form der pyramidenförmigen Facettenplatte kann auch eine andere Art von Strahlformungselement verwendet werden, um den kollimierten Laserstrahl 9 umzulenken und auf die ringförmige doppelbrechende Facettenplatte 23 zu richten. Beispielsweise kann zu diesem Zweck ein kegelförmiges Axicon verwendet werden, welches das in der Regel Gauß- oder Tophat-förmige Strahlprofil des zugeführten Laserstrahls 9 in ein ringförmiges Strahlprofil umwandelt. Der auf diese Weise gebildete ringförmige, kollimierte Laserstrahl 9 tritt schräg nach außen gerichtet aus dem Axicon aus und trifft auf die jeweiligen Strahleintrittsflächen 12a-f der doppelbrechenden Strahlteilerelemente 13a-f des doppelbrechenden Facettenelements 23 auf. Hierbei bildet ein jeweiliger in Umfangsrichtung verlaufender Abschnitt des ringförmigen Laserstrahls 9 einen der sechs Laser(teil)strahlen 9a-f, der über die jeweilige Strahleintrittsfläche 12a-f in das entsprechende doppelbrechende Strahlteilerelement 13a-f eintritt.

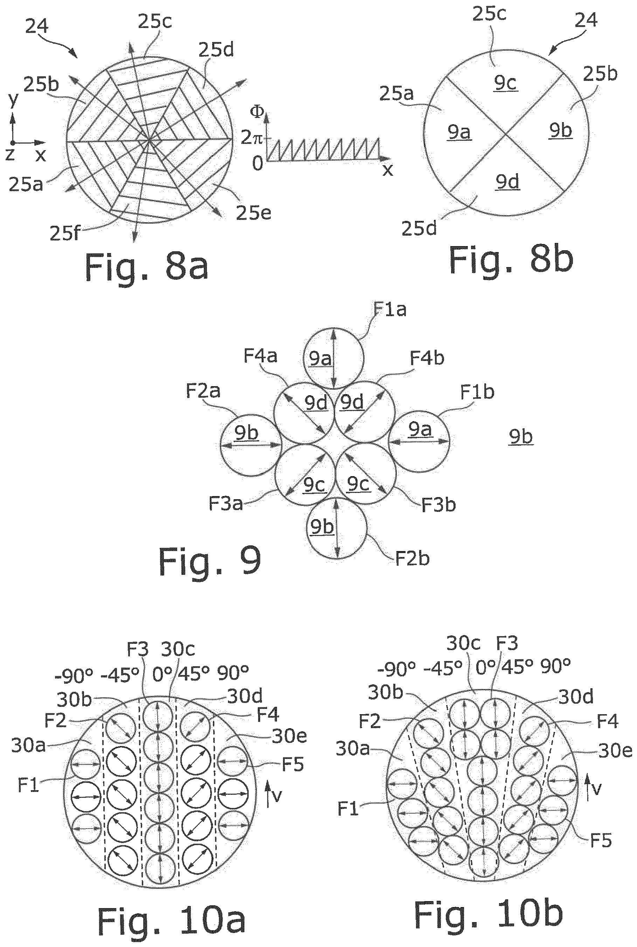

Als Strahlformungselement kann auch ein diffraktives optisches Element **24** dienen, beispielsweise wie es in **Fig. 8a** in einer Draufsicht dargestellt ist. Die Verwendung eines diffraktiven optischen Elements 24 ist insbesondere für den Fall günstig, dass die Laserstrahlen 9a-f an dem Strahlformungselement 24 nicht nur unter einem Winkel α in radialer Richtung zur optischen Achse 15 der Fokussieroptik 16, sondern zusätzlich auch in azimutaler Richtung zur optischen Achse 15 ausgerichtet werden sollen. In diesem Fall liegen der dem Strahlformungselement 24 zugeführte Laserstrahl 9, der jeweils aus dem Strahlformungselement 24 austretende Laserstrahl 9a-f und die optische Achse 15 der Fokussieroptik 16 nicht in einer gemeinsamen Ebene. Bei der Verwendung eines Strahlformungselements 22 in Form der in Fig. 6a,b gezeigten pyramidenförmigen Facettenplatte würde dies bedeuten, dass die Flächennormalen der Facettenflächen zusätzlich in azimutaler Richtung verkippt werden, um eine zusätzliche azimutale Auslenkung der Laserstrahlen 9a-f zu erzeugen. Da in diesem Fall die pyramidenförmigen Facettenflächen nicht mehr stetig aneinander angrenzen, könnte es bei der Verwendung einer solchen Facettenplatte 22 zu unerwünschten Beugungseffekten kommen.

Bei dem in Fig. 8a gezeigten diffraktiven optischen Element 24, welches ebenfalls sechs Facetten **25a-f** zur Bildung eines jeweiligen Laserstrahls 9a-f aufweist, kann dieses Problem vermieden werden. Bei dem diffraktiven optischen Element 24 kann es sich beispielsweise um eine transparente Platte handeln, welche eine Sägezahnstruktur aufweist, wie in Fig. 8a anhand eines Sägezahnprofils dargestellt ist, welches entlang des gestrichelten Pfeils verläuft.

Ein jeweiliger von dem diffraktiven optischen Element 24 gebildeter Laserstrahl 9a-f trifft unter zwei Winkeln α, **δ** verkippt auf eine jeweilige Strahleintrittsfläche 12a-f eines doppelbrechenden Strahlteilerelements 10a-f. Um sicherzustellen, dass auch in diesem Fall der jeweilige Laserstrahl 9a-f senkrecht zur Strahleintrittsfläche 12a-f auftrifft, ist auch die jeweilige Strahleintrittsfläche 12a-f zusätzlich zu dem Winkel α in radialer Richtung unter einem Winkel δ in azimutaler Richtung verkippt, wie dies beispielhaft in Fig. 6b gestrichelt für die Strahleintrittsfläche 12c des dritten Strahlteilerelements 10c, genauer gesagt für dessen Flächennormale 14c, dargestellt ist. Die beiden an dem dritten Strahlteilerelement 10c gebildeten Teilstrahlen 11a, 11b liegen in diesem Fall mit der optischen Achse 15 der Fokussieroptik 16 nicht in einer gemeinsamen Ebene, sondern sind zu dieser in azimutaler Richtung verkippt. Auf diese Weise kann zusätzlich zu einer radialen Aufteilung der Teilstrahlen 11a,b bzw. der zugehörigen Fokusflächen F1, F2 auch eine azimutale Aufteilung erfolgen, die für den ersten und den zweiten Teilstrahl 11a,b unterschiedlich groß sein kann.

Beispielsweise kann mit Hilfe eines nicht bildlich dargestellten doppelbrechenden Facettenelements 23, welches vier doppelbrechende Strahlteilerelemente aufweist, deren Strahleintrittsflächen wie das in Fig. 6b gezeigte dritte doppelbrechende Strahlteilerelement 11c sowohl in radialer Richtung als auch in azimutaler Richtung unter einem Winkel α, δ zur optischen Achse 15 verkippt sind, eine in **Fig. 9** dargestellte Verteilung von Fokusflächen **F1a,b**; **F2a,b**; **F3a,b**; **F4a,b** erzeugt werden, bei der die lineare Polarisationsrichtung an den Fokusflächen F1a,b; F2a,b; F3a,b; F4a,b jeweils in radialer Richtung zur optischen Achse 15 ausgerichtet ist. Um eine solche Verteilung zu erzeugen, kann das in **Fig. 8b** dargestellte facettierte diffraktive optische Element 24 verwendet werden, das an jeder der vier Facettenflächen 25a-d einen in radialer Richtung und zusätzlich in azimutaler Richtung verkippten Laserstrahl 9a-d erzeugt, wie in Fig. 8b in der jeweiligen Facette 25a-d zu erkennen ist.

Jeder der vier Laserstrahlen 9a-d wird an dem doppelbrechenden Facettenelement in zwei Teilstrahlen aufgeteilt, so dass sich die in Fig. 9 gezeigte Verteilung der Fokusflächen F1a,b; F2a,b; F3a,b; F4a,b ergibt. Zur Vereinfachung der Darstellung ist an einer jeweiligen Fokusfläche F1a,b; F2a,b; F3a,b; F4a,b der jeweilige Laserstrahl 9a-d zu erkennen, welcher jeweils zwei Fokusflächen F1a,b bzw. F2a,b, F3a,b, F4a,b zugeordnet ist. Es versteht sich, dass an Stelle des in Fig. 8b dargestellten diffraktiven optischen Elements 24 auch eine geeignet modifizierte pyramidenförmige Facettenplatte als Strahlformungselement verwendet werden kann.

Auf die in Zusammenhang mit Fig. 8a,b und Fig. 9 dargestellte Weise lassen sich auch komplexere Anordnungen von Fokusflächen in der Fokusebene 2a erzeugen, da die Fokusflächen in der Nähe zur optischen Achse 15 praktisch beliebig angeordnet und sich ggf. ganz oder teilweise gegenseitig überlappen können. **Fig. 10a**,b zeigen eine Verteilung von Fokusflächen F1 bis F5, die in fünf Streifen **30a-e** angeordnet sind, die sich jeweils entlang einer Vorschubrichtung v des Laserschneidens erstrecken (vgl. Fig. 1).

Die Fokusflächen F1 bis F5 in einem jeweiligen Streifen 30a-e weisen eine identische lineare Polarisationsrichtung auf, die sich von der linearen Polarisationsrichtung der Fokusflächen F1 bis F5 eines jeweils benachbarten Streifens 30a-e unterscheidet. Die Streifen 30a-e können - wie dies in Fig. 10a dargestellt ist - parallel zueinander und parallel zur Vorschubrichtung v verlaufen, es ist aber auch möglich, dass die Streifen 30a-e unter (verschiedenen) Winkeln zur Vorschubrichtung v ausgerichtet sind, wie dies beispielhaft in Fig. 10b dargestellt ist. Bevorzugt nimmt der Winkel, den die jeweilige lineare Polarisationsrichtung mit der Vorschubrichtung v einschließt, von innen, d.h. vom mittleren Streifen 30c, nach außen hin zu, wie in Fig. 10a,b anhand der über den jeweiligen Streifen 30a-e dargestellten Winkelangaben erkennbar ist, welche den Winkel der linearen Polarisationsrichtung der Fokusflächen F1-F5 zur Vorschubrichtung bezeichnet. Es versteht sich, dass die Einhüllende der Anordnung der Fokusflächen F1-F5 in der Fokusebene 2a nicht zwingend wie in Fig. 10a,b kreisförmig sein muss, sondern beispielsweise ein (beliebiges) Polygon bilden kann.

Obgleich die weiter oben beschriebenen Beispiele in Zusammenhang mit einem Laserschneidprozess beschrieben wurden, können diese ggf. auch bei anderen Laserbearbeitungsprozessen vorteilhaft eingesetzt werden, beispielsweise beim Laserschweißen, beim Laserbohren, etc. Auch ist die Erzeugung von Fokusflächen mit einer linearen Polarisation nicht zwingend erforderlich, vielmehr können die Teilstrahlen, welche auf die Fokusflächen fokussiert werden, auch eine elliptische Polarisation aufweisen.

## Patentansprüche

1. Laserbearbeitungsmaschine (1), umfassend: einen Laserbearbeitungskopf (4) zur Bearbeitung eines Werkstücks (2) mittels mindestens eines Laserstrahls (9, 9a-f), der Laserbearbeitungskopf (4) umfassend:
mindestens ein doppelbrechendes Strahlteilerelement (10, 10a-f) zur Aufteilung des mindestens einen Laserstrahls (9, 9a-f), der in einem zufällig polarisierten oder unpolarisierten Zustand auf eine Strahleintrittsfläche (12, 12a, 12d) des doppelbrechenden Strahlteilerelements (10, 10a, 10d) auftrifft, auf zwei Teilstrahlen (11a, 11b) mit zueinander senkrechter linearer Polarisation, wobei
das doppelbrechende Strahlteilerelement (10, 10a, 10d) eine nicht parallel zur Strahleintrittsfläche (12, 10a, 10d) ausgerichtete Strahlaustrittsfläche (13, 13a, 13d) zum Austritt der beiden Teilstrahlen (11a, 11b) aufweist, sowie eine Fokussieroptik (16) zur Fokussierung der Teilstrahlen (11a, 11b) auf mindestens zwei Fokusflächen (F1, F2) in einer Fokusebene (2a), die sich an einer Oberseite des Werkstücks (2) oder in der Nähe der Oberseite des Werkstücks (2) befindet, wobei sowohl die Strahleintrittsfläche (12, 12a, 12d) als auch die Strahlaustrittsfläche (13, 13a, 13d) des Strahlteilerelements (10, 10a, 10d) unter einem Winkel ungleich 90° oder 180° zu einer optischen Achse (15) der nachfolgenden Fokussieroptik (16) angeordnet sind,
wobei die Laserbearbeitungsmaschine (1) weiter umfasst:
ein nicht polarisationserhaltendes Lichtleitkabel (8) zur Zuführung des Laserstrahls (9) zu dem Laserbearbeitungskopf (4),
**dadurch gekennzeichnet,**
**dass** der Laserbearbeitungskopf (4) ausgebildet ist, den Laserstrahl (9) senkrecht zur Strahleintrittsfläche (12, 12a, 12d) auf das doppelbrechende Strahlteilerelement (10, 10a, 10d) einzustrahlen.

2. Laserbearbeitungsmaschine nach Anspruch 1, bei der eine optische Achse (17) des doppelbrechenden Materials des doppelbrechenden Strahlteilerelements (10) parallel zur Strahleintrittsfläche (12) ausgerichtet ist.

3. Laserbearbeitungsmaschine nach Anspruch 2, bei der die beiden Teilstrahlen (11a, 11b) an der Strahlaustrittsfläche (13) des doppelbrechenden Strahlteilerelements (10) mit einem Differenz-Winkel (Δβ = |βₐ - β_{b}|) austreten, der zwischen 0,25 mrad und 10 mrad liegt, wobei das doppelbrechende Strahlteilerelement (10) aus Quarz gebildet ist, und wobei die Strahlaustrittsfläche (13) des doppelbrechenden Strahlteilerelements (10) unter einem Fasenwinkel (γ) zur Flächennormalen (14) der Strahleintrittsfläche (12) ausgerichtet ist, der zwischen 50° und 89°, bevorzugt zwischen 60° und 85°, beträgt.

4. Laserbearbeitungsmaschine nach Anspruch 3, bei welcher das doppelbrechende Strahlteilerelement (10) derart ausgebildet und zur optischen Achse (15) der Fokussieroptik (16) ausgerichtet ist, dass die Fokusflächen (F1 , F2) des ersten und des zweiten aus der Strahlaustrittsfläche (13) austretenden Teilstrahls (11a, 11 b) denselben Abstand (A) zur optischen Achse (15) der Fokussieroptik (16) aufweisen.

5. Laserbearbeitungsmaschine nach einem der vorhergehenden Ansprüche, bei welcher der Laserbearbeitungskopf (4) weiter umfasst: mindestens eine polarisationsdrehende Einrichtung (19), insbesondere eine λ/2-Platte, die zumindest einen Teilbereich, insbesondere die Hälfte, eines Strahlquerschnitts (D) der aus dem doppelbrechenden Strahlteilerelement (10) austretenden Teilstrahlen (11a, 11b) überdeckt.

6. Laserbearbeitungsmaschine nach einem der vorhergehenden Ansprüche, bei welcher der Laserbearbeitungskopf (4) weiter umfasst: mindestens ein weiteres Strahlteilerelement (21) zur Aufteilung der beiden aus der Strahlaustrittsfläche (13) des doppelbrechenden Strahlteilerelements (10) austretenden Teilstrahlen (11a, 11b) auf mindestens vier Teilstrahlen (11a-d).

7. Laserbearbeitungsmaschine nach Anspruch 6, bei welcher der Laserbearbeitungskopf (1) weiter umfasst: eine weitere polarisationsdrehende Einrichtung (21), insbesondere eine weitere λ/2-Platte, die einen Strahlquerschnitt der mindestens vier Teilstrahlen (11a-d) vollständig überdeckt.

8. Laserbearbeitungsmaschine nach den Ansprüchen 5, 6 und 7, bei welcher der Laserbearbeitungskopf (4) ausgebildet ist, mindestens vier Teilstrahlen (11a-d) in die Fokusebene (2a) zu fokussieren, deren Fokusflächen (F1-F4) eine radial zur optischen Achse (15) der Fokussieroptik (16) ausgerichtete lineare Polarisationsrichtung aufweisen.

9. Laserbearbeitungsmaschine nach einem der vorhergehenden Ansprüche, bei welcher der Laserbearbeitungskopf (4) eine Mehrzahl von doppelbrechenden Strahlteilerelementen (10a-e) aufweist, die zur optischen Achse (15) der Fokussieroptik (16) versetzt angeordnet sind, wobei die Mehrzahl von doppelbrechenden Strahlteilerelementen (10a-e) bevorzugt ringförmig um die optische Achse (15) der Fokussieroptik (16) angeordnet ist, wobei der Laserbearbeitungskopf (4) weiter umfasst:
mindestens ein Strahlformungselement (22, 24) zur Formung eines Strahlprofils eines der Vorrichtung (4) zugeführten Laserstrahls (9) zur Bildung von einem ringförmigen Laserstrahl (9) oder von mindestens zwei Laserstrahlen (9a, 9d), der/die auf mindestens zwei Strahleintrittsflächen (12a, 12d) von mindestens zwei der doppelbrechenden Strahlteilerelemente (10a, 10d) auftrifft/auftreffen.

10. Laserbearbeitungsmaschine nach Anspruch 7, bei welcher die Strahleintrittsflächen (12a, 12d) der zur optischen Achse (15) der Fokussieroptik (16) versetzt angeordneten doppelbrechenden Strahlteilerelemente (10a-e) zur optischen Achse (15) der Fokussieroptik (16) hin geneigt sind.

11. Laserbearbeitungsmaschine nach Anspruch 9, bei der die ringförmig angeordneten doppelbrechenden Strahlteilerelemente (10a-e) jeweils einen zweiten Teilstrahl (11b) erzeugen, dessen Fokusfläche (F1-F6) in der Fokusebene (2a) eine radial zur optischen Achse (15) der Fokussieroptik (16) ausgerichtete lineare Polarisationsrichtung aufweist, und bei der erste Teilstrahlen (11a), die von den doppelbrechenden Strahlteilerelementen (10a-e) erzeugt werden, zumindest teilweise auf eine gemeinsame Fokusfläche (FZ) fokussiert werden, die zentrisch zur optischen Achse (15) der Fokussieroptik (16) angeordnet ist.

12. Laserbearbeitungsmaschine nach einem der Ansprüche 8 oder 9, bei welcher die Strahleintrittsfläche (12c) und bevorzugt die Strahlaustrittsfläche (13c) des doppelbrechenden Strahlteilerelements (10c) zusätzlich in azimutaler Richtung in Bezug auf die optische Achse (15) der Fokussieroptik (16) geneigt sind.

13. Laserbearbeitungsmaschine nach Anspruch 10, bei welcher das Strahlformungselement (24) als diffraktives optisches Element ausgebildet ist, wobei der Laserbearbeitungskopf (4) ausgebildet ist, in der Fokusebene (2a) mindestens zwei Streifen (30a-e) mit mehreren Fokusflächen (F1-F5) zu erzeugen, wobei die Fokusflächen (F1-F5) eines jeweiligen Streifens (30a-e) eine identische Polarisation, insbesondere eine identische Polarisationsrichtung, aufweisen und wobei die Polarisation, insbesondere die Polarisationsrichtung, der Fokusflächen (F1-F5) benachbarter Streifen (30a-e) sich voneinander unterscheidet.

14. Laserbearbeitungsmaschine nach einem der Ansprüche 7 bis 11, bei welcher das Strahlformungselement (22) einen geometrischen Strahlteiler, insbesondere ein Facettenelement, zur Aufteilung des zugeführten Laserstrahls (9) auf mehrere Laserstrahlen (9a-f) oder ein Axicon zur Erzeugung eines Laserstrahls mit ringförmigem Strahlprofil bildet.

15. Verfahren zum Bearbeiten, insbesondere zum Laserschneiden, eines Werkstücks (2) mittels einer Laserbearbeitungsmaschine (1) nach einem der vorhergehenden Ansprüche, umfassend:
Bewegen des Laserbearbeitungskopfs (4) und des Werkstücks (2) relativ zueinander entlang einer Vorschubrichtung (v), sowie
Fokussieren der mindestens zwei Teilstrahlen (11a, 11b) auf die mindestens zwei Fokusflächen (F1, F2) in der Fokusebene (2a), die im Bereich des Werkstücks (2) gebildet ist, wobei die mindestens zwei Fokusflächen (F1, F2) bevorzugt zumindest teilweise in Vorschubrichtung (v) zueinander versetzt angeordnet sind.

16. Verfahren nach Anspruch 15, umfassend: Bewegen eines Laserbearbeitungskopfs (4), dem ein Laserstrahl (9) zugeführt wird, und des Werkstücks (2) relativ zueinander entlang einer Vorschubrichtung (v), sowie
Fokussieren von mehreren linear oder elliptisch polarisierten Teilstrahlen (11a, 11b) des zugeführten Laserstrahls (9) auf mehrere Fokusflächen (F1-F5; F1-F6) in einer Fokusebene (2a), die im Bereich des Werkstücks (2) gebildet ist, wobei entweder mittels eines Laserbearbeitungskopfs (4) der Laserbearbeitungsmaschine nach Anspruch 13 beim Fokussieren der Teilstrahlen (11a, 11b) in der Fokusebene (2a) mindestens zwei Streifen (30a-e) mit mehreren Fokusflächen (F1-F5) erzeugt werden, die sich entlang der Vorschubrichtung (v) erstrecken, wobei die Fokusflächen (F1-F5) in einem jeweiligen Streifen (30a-e) eine identische lineare Polarisationsrichtung aufweisen und wobei die Fokusflächen (F1-F5) benachbarter Streifen (30a-e) eine jeweils unterschiedliche lineare Polarisationsrichtung aufweisen,
oder mittels eines Laserbearbeitungskopfs (4) einer Laserbearbeitungsmaschine nach Anspruch 11 beim Fokussieren der Teilstrahlen (11a, 11b) in der Fokusebene (2a) eine Mehrzahl von ringförmig um die optische Achse (15) einer Fokussieroptik (16) des Laserbearbeitungskopfs (4) angeordneten Fokusflächen (F1-F6) erzeugt wird, wobei die ringförmig angeordneten Fokusflächen (F1-F6) eine radial zur optischen Achse (15) ausgerichtete lineare Polarisationsrichtung aufweisen, und wobei eine zentrisch zur optischen Achse (15) angeordnete Fokusfläche (FZ), die bevorzugt durch eine zumindest teilweise räumliche Überlagerung von mindestens zwei der Teilstrahlen (11b) gebildet wird, eine höhere Strahlungsintensität (I_{Z}) aufweist als eine jeweilige ringförmig angeordnete Fokusfläche (F1-F6).

## Claims

1. A laser processing machine (1) comprising: a laser processing head (4) for processing a workpiece (2) by means of at least one laser beam (9, 9a-f), the laser processing head (4) comprising:
at least one birefringent beam splitter element (10, 10a-f) for splitting the at least one laser beam (9, 9a-f), which strikes a beam entrance surface (12, 12a, 12d) of the birefringent beam splitter element (10, 10a, 10d) in a randomly polarized or unpolarized state, into two partial beams (11a, 11b) with mutually perpendicular linear polarization, wherein the birefringent beam splitter element (10, 10a, 10d) has a beam exit surface (13, 13a, 13d) which is not aligned parallel to the beam entrance surface (12, 10a, 10d), for the exit of the two partial beams (11a, 11b), and a focusing optics (16) for focusing the partial beams (11a, 11b) on at least two focal surfaces (F1, F2) in a focal plane (2a) which is located on an upper side of the workpiece (2) or in the vicinity of the upper side of the workpiece (2), wherein both the beam entrance surface (12, 12a, 12d) and the beam exit surface (13, 13a, 13d) of the beam splitter element (10, 10a, 10d) are arranged at an angle not equal to 90° or 180° to an optical axis (15) of the subsequent focusing optics (16),
wherein the laser processing machine (1) further comprises:
a non-polarization-maintaining fiber optic light guide (8) for supplying the laser beam (9) to the laser processing head (4),
**characterized in that**
the laser processing head (4) is designed to irradiate the laser beam (9) perpendicular to the beam entrance surface (12, 12a, 12d) onto the birefringent beam splitter element (10, 10a, 10d).

2. The laser processing machine according to claim 1, in which an optical axis (17) of the birefringent material of the birefringent beam splitter element (10) is aligned parallel to the beam entrance surface (12).

3. The laser processing machine according to claim 2, in which the two partial beams (11a, 11b) emerge at the beam exit surface (13) of the birefringent beam splitter element (10) with a difference angle (△β = |βₐ - β_{b}|) which is between 0.25 mrad and 10 mrad, wherein the birefringent beam splitter element (10) is formed from quartz, and wherein the beam exit surface (13) of the birefringent beam splitter element (10) is aligned at a bevel angle (γ) to the surface normal (14) of the beam entrance surface (12), which is between 50° and 89°, preferably between 60° and 85°.

4. The laser processing machine according to claim 3, in which the birefringent beam splitter element (10) is designed and aligned with the optical axis (15) of the focusing optics (16) in such a way that the focal surfaces (F1, F2) of the first and second partial beams (11a, 11b) emerging from the beam exit surface (13) are at the same distance (A) from the optical axis (15) of the focusing optics (16).

5. The laser processing machine according to one of the preceding claims, wherein the laser processing head (4) further comprises: at least one polarization-rotating device (19), in particular a λ/2 plate, which covers at least a section, in particular half, of a beam cross-section (D) of the partial beams (11a, 11b) emerging from the birefringent beam splitter element (10).

6. The laser processing machine according to one of the preceding claims, wherein the laser processing head (4) further comprises: at least one further beam splitter element (21) for splitting the two partial beams (11a, 11b) emerging from the beam exit surface (13) of the birefringent beam splitter element (10) into at least four partial beams (11a-d).

7. The laser processing machine according to claim 6, in which the laser processing head (1) further comprises: a further polarization-rotating device (21), in particular a further λ/2 plate, which completely covers a beam cross-section of the at least four partial beams (11a-d).

8. The laser processing machine according to claims 5, 6 and 7, in which the laser processing head (4) is designed to focus at least four partial beams (11a-d) into the focal plane (2a), the focal surfaces (F1-F4) of which have a linear polarization direction aligned radially to the optical axis (15) of the focusing optics (16).

9. The laser processing machine according to one of the preceding claims, wherein the laser processing head (4) comprises a plurality of birefringent beam splitter elements (10a-e) arranged offset to the optical axis (15) of the focusing optics (16), wherein the plurality of birefringent beam splitter elements (10a-e) is preferably arranged annularly around the optical axis (15) of the focusing optics (16), wherein the laser processing head (4) further comprises:
at least one beam shaping element (22, 24) for shaping a beam profile of a laser beam (9) supplied to the device (4) to form an annular laser beam (9) or at least two laser beams (9a, 9d) which strikes or strike at least two beam entrance surfaces (12a, 12d) of at least two of the birefringent beam splitter elements (10a, 10d).

10. The laser processing machine according to claim 7, in which the beam entrance surfaces (12a, 12d) of the birefringent beam splitter elements (10a-e), which are arranged offset to the optical axis (15) of the focusing optics (16), are inclined towards the optical axis (15) of the focusing optics (16).

11. The laser processing machine according to claim 9, in which the annularly arranged birefringent beam splitter elements (10a-e) each generate a second partial beam (11b) whose focal surface (F1-F6) in the focal plane (2a) has a linear polarization direction aligned radially to the optical axis (15) of the focusing optics (16), and in which first partial beams (11a), which are generated by the birefringent beam splitter elements (10a-e), are at least partially focused onto a common focal surface (FZ), which is arranged centrally to the optical axis (15) of the focusing optics (16).

12. The laser processing machine according to one of claims 8 or 9, wherein the beam entrance surface (12c) and preferably the beam exit surface (13c) of the birefringent beam splitter element (10c) are additionally inclined in azimuthal direction with respect to the optical axis (15) of the focusing optics (16).

13. The laser processing machine according to claim 10, in which the beam shaping element (24) is designed as a diffractive optical element, wherein the laser processing head (4) is designed to generate at least two stripes (30a-e) with a plurality of focal surfaces (F1-F5) in the focal plane (2a), wherein the focal surfaces (F1-F5) of a respective stripe (30a-e) have an identical polarization, in particular an identical polarization direction, and wherein the polarization, in particular the polarization direction, of the focal surfaces (F1-F5) of adjacent stripes (30a-e) differs from one another.

14. The laser processing machine according to one of claims 7 to 11, in which the beam shaping element (22) forms a geometric beam splitter, in particular a facet element, for splitting the supplied laser beam (9) into a plurality of laser beams (9a-f) or an axicon for generating a laser beam with an annular beam profile.

15. A method for processing, in particular for laser cutting, a workpiece (2) by means of a laser processing machine (1) according to one of the preceding claims, comprising:
moving the laser processing head (4) and the workpiece (2) relative to each other along a feed direction (v), and
focusing the at least two partial beams (11a, 11b) onto the at least two focal surfaces (F1, F2) in the focal plane (2a) formed in the region of the workpiece (2), the at least two focal surfaces (F1, F2) preferably being arranged at least partially offset from one another in the feed direction (v).

16. The method according to claim 15, comprising:
moving a laser processing head (4), to which a laser beam (9) is supplied, and the workpiece (2) relative to each other along a feed direction (v), and
focusing of a plurality of linearly or elliptically polarized partial beams (11a, 11b) of the supplied laser beam (9) onto a plurality of focal surfaces (F1-F5; F1-F6) in a focal plane (2a) formed in the region of the workpiece (2), wherein either by means of a laser processing head (4) of the laser processing machine according to claim 13, at least two stripes (30a-e) with several focal surfaces (F1-F5) are generated in the focal plane (2a) when focusing the partial beams (11a, 11b), which extend along the feed direction (v), wherein the focal surfaces (F1-F5) in a respective stripe (30a-e) have an identical linear polarization direction and the focal surfaces (F1-F5) of adjacent strips (30a-e) have a different linear polarization direction, or by means of a laser processing head (4) of a laser processing machine according to claim 11, when focusing the partial beams (11a, 11b) in the focal plane (2a), a plurality of focal surfaces (F1-F6) arranged annularly around the optical axis (15) of a focusing optics (16) of the laser processing head (4) is generated, wherein the annularly arranged focal surfaces (F1-F6) have a linear polarization direction aligned radially to the optical axis (15), and
wherein a focal surface (FZ) arranged centrally with respect to the optical axis (15), which is preferably formed by an at least partially spatial superimposition of at least two of the partial beams (11b), has a higher radiation intensity (Iz) than a respective annularly arranged focal surface (F1-F6).

## Revendications

1. Machine de traitement au laser (1), comprenant : une tête de traitement au laser (4) pour le traitement d'une pièce (2) au moyen d'au moins un faisceau laser (9, 9a-f), la tête de traitement au laser (4) comprenant :
au moins un élément séparateur de faisceau biréfringent (10, 10a-f) pour la répartition d'au moins un faisceau laser (9, 9a-f) percutant une surface d'entrée de faisceau (12, 12a, 12d) de l'élément séparateur de faisceau biréfringent (10, 10a, 10d) dans un état polarisé ou non polarisé aléatoire, en deux faisceaux partiels (11a, 11b) avec une polarisation linéaire perpendiculaire l'une à l'autre, dans lequel l'élément séparateur de faisceau biréfringent (10, 10a, 10d) présente une surface de sortie de faisceau (13, 13a, 13d) non parallèle à la surface d'entrée de faisceau (12, 10a, 10d) pour la sortie des deux faisceaux partiels (11a, 11b), ainsi qu'une optique de focalisation (16) pour focaliser les faisceaux partiels (11a, 11b) sur au moins deux surfaces de focalisation (F1, F2) dans un plan de focalisation (2a), situé sur la partie supérieure de la pièce (2) ou à proximité de la partie supérieure de la pièce (2), dans laquelle tant la surface d'entrée de faisceau (12, 12a, 12d) que la surface de sortie de faisceau (13, 13a, 13d) de l'élément séparateur de faisceau (10, 10a, 10d) sont disposées sous un angle différent de 90° ou 180° par rapport à un axe optique (15) de l'optique de focalisation (16) suivante,
dans laquelle la machine de traitement au laser (1) comprend en outre :
un câble de guidage de lumière non conservateur de polarisation (8) pour l'acheminement du faisceau laser (9) vers la tête de traitement au laser (4),
**caractérisée en ce que**
la tête de traitement au laser (4) est conçue pour projeter le faisceau laser (9) perpendiculairement à la surface d'entrée de faisceau (12, 12a, 12d) vers l'élément séparateur de faisceau biréfringent (10, 10a, 10d).

2. Machine de traitement au laser selon la revendication 1, dans laquelle un axe optique (17) du matériau biréfringent de l'élément séparateur de faisceau biréfringent (10) est orienté parallèlement à la surface d'entrée de faisceau (12).

3. Machine de traitement au laser selon la revendication 2, dans laquelle les deux faisceaux partiels (11a, 11b) sortent de la surface de sortie de faisceau (13) de l'élément séparateur de faisceau biréfringent (10) avec un angle différentiel (△β = |βₐ - β_{b}|) compris entre 0,25 mrad et 10 mrad, dans laquelle l'élément séparateur de faisceau biréfringent (10) est formé de quartz, et dans laquelle la surface de sortie de faisceau (13) de l'élément séparateur de faisceau biréfringent (10) est orientée selon un angle de chanfrein (γ) par rapport à la normale de la surface (14) de la surface d'entrée de faisceau (12) compris entre 50° et 89°, de préférence entre 60° et 85°.

4. Machine de traitement au laser selon la revendication 3, dans laquelle l'élément séparateur de faisceau biréfringent (10) est conçu et orienté par rapport à l'axe optique (15) de l'optique de focalisation (16) de sorte que les surfaces de focalisation (F1, F2) des premier et deuxième faisceaux partiels (11a, 11b) sortant de la surface de sortie de faisceau (13) présentent la même distance (A) par rapport à l'axe optique (15) de l'optique de focalisation (16).

5. Machine de traitement au laser selon l'une des revendications précédentes, dans laquelle la tête de traitement au laser (4) comprend en outre : au moins un dispositif de rotation de polarisation (19), notamment une plaque λ/2, couvrant au moins une partie, en particulier la moitié, d'une section de faisceau (D) des faisceaux partiels (11a, 11b) sortant de l'élément séparateur de faisceau biréfringent (10).

6. Machine de traitement au laser selon l'une des revendications précédentes, dans laquelle la tête de traitement au laser (4) comprend en outre : au moins un autre élément séparateur de faisceau (21) pour la répartition des deux faisceaux partiels (11a, 11b) sortant de la surface de sortie de faisceau (13) de l'élément séparateur de faisceau biréfringent (10) en au moins quatre faisceaux partiels (11a-d).

7. Machine de traitement au laser selon la revendication 6, dans laquelle la tête de traitement au laser (1) comprend en outre : un autre dispositif de rotation de polarisation (21), notamment une autre plaque λ/2, couvrant entièrement une section transversale de faisceau d'au moins quatre faisceaux partiels (11a-d).

8. Machine de traitement au laser selon les revendications 5, 6 et 7, dans laquelle la tête de traitement au laser (4) est conçue pour focaliser au moins quatre faisceaux partiels (11a-d) dans le plan de focalisation (2a), dont les surfaces de focalisation (F1-F4) présentent une direction de polarisation linéaire radialement orientée par rapport à l'axe optique (15) de l'optique de focalisation (16).

9. Machine de traitement au laser selon l'une des revendications précédentes, dans laquelle la tête de traitement au laser (4) présente une pluralité d'éléments séparateurs de faisceau biréfringents (10a-e), disposés de manière décalée par rapport à l'axe optique (15) de l'optique de focalisation (16), dans laquelle la pluralité d'éléments séparateurs de faisceau biréfringents (10a-e) est de préférence disposée en anneau autour de l'axe optique (15) de l'optique de focalisation (16), dans laquelle la tête de traitement au laser (4) comprend en outre :
au moins un élément de mise en forme de faisceau (22, 24) pour la mise en forme d'un profil de faisceau du faisceau laser (9) acheminé vers le dispositif (4) pour la formation d'un faisceau laser (9) en anneau ou d'au moins deux faisceaux laser (9a, 9d) qui percute(nt) au moins deux surfaces d'entrée de faisceau (12a, 12d) d'au moins deux des éléments séparateurs de faisceau biréfringents (10a, 10d).

10. Machine de traitement au laser selon la revendication 7, dans laquelle les surfaces d'entrée de faisceau (12a, 12d) des éléments séparateurs de faisceau biréfringents (10a-e) disposés de manière décalée par rapport à l'axe optique (15) de l'optique de focalisation (16) sont inclinées vers l'axe optique (15) de l'optique de focalisation (16).

11. Machine de traitement au laser selon la revendication 9, dans laquelle les éléments séparateurs de faisceaux biréfringents (10a-e) disposés en anneau génèrent chacun un deuxième faisceau partiel (11b), dont la surface de focalisation (F1-F6) dans le plan de focalisation (2a) présente une direction de polarisation linéaire orientée radialement par rapport à l'axe optique (15) de l'optique de focalisation (16), et dans lequel les premiers faisceaux partiels (11a), générés par les éléments séparateurs de faisceau biréfringents (10a-e), sont au moins partiellement focalisés sur une surface de focalisation commune (FZ), disposée de manière concentrique par rapport à l'axe optique (15) de l'optique de focalisation (16).

12. Machine de traitement au laser selon l'une des revendications 8 ou 9, dans laquelle la surface d'entrée de faisceau (12c) et de préférence la surface de sortie de faisceau (13c) de l'élément séparateur de faisceau biréfringent (10c) sont en outre inclinées dans une direction azimutale par rapport à l'axe optique (15) de l'optique de focalisation (16).

13. Machine de traitement au laser selon la revendication 10, dans laquelle l'élément de mise en forme de faisceau (24) est conçu comme un élément optique diffractif, dans lequel la tête de traitement au laser (4) est conçue pour générer dans le plan de focalisation (2a) au moins deux bandes (30a-e) avec plusieurs surfaces de focalisation (F1-F5), dans lesquelles les surfaces de focalisation (F1-F5) d'une bande (30a-e) respective présentent une polarisation identique, en particulier une direction de polarisation identique, et dans lesquelles la polarisation, en particulier la direction de polarisation, des surfaces de focalisation (F1-F5) des bandes(30a-e) adjacentes sont différentes les unes des autres.

14. Machine de traitement au laser selon l'une des revendications 7 à 11, dans laquelle l'élément de mise en forme de faisceau (22) forme un séparateur de faisceau géométrique, notamment un élément à facettes, pour la répartition du faisceau laser (9) acheminé en plusieurs faisceaux laser (9a-f) ou un axicon pour la génération d'un faisceau laser avec un profil de faisceau en anneau.

15. Procédé de traitement, en particulier de découpe au laser, d'une pièce (2) au moyen d'une machine de traitement au laser (1) selon l'une des revendications précédentes, comprenant :
le déplacement de la tête de traitement au laser (4) et de la pièce (2) l'un par rapport à l'autre le long d'une direction de progression (v), ainsi que
la focalisation d'au moins deux faisceaux partiels (11a, 11b) sur au moins deux surfaces de focalisation (F1, F2) dans le plan de focalisation (2a), formé dans la zone de la pièce (2), dans laquelle au moins deux surfaces de focalisation (F1, F2) sont disposées de préférence au moins partiellement de manière décalée l'une par rapport à l'autre dans la direction de progression (v).

16. Procédé selon la revendication 15, comprenant :
le déplacement d'une tête de traitement au laser (4), à laquelle un faisceau laser (9) est acheminé, et de la pièce (2) l'une par rapport à l'autre le long d'une direction de progression (v), ainsi que
la focalisation de plusieurs faisceaux partiels (11a, 11b) polarisés de manière linéaire ou elliptique du faisceau laser (9) acheminé sur plusieurs surfaces de focalisation (F1-F5; F1-F6) dans un plan de focalisation (2a), formé dans la zone de la pièce (2), dans lequel soit au moyen d'une tête de traitement au laser (4) de la machine de traitement au laser selon la revendication 13, lors de la focalisation des faisceaux partiels (11a, 11b) dans le plan de focalisation (2a), au moins deux bandes (30a-e) avec plusieurs surfaces de focalisation (F1-F5) sont générées, s'étendant le long de la direction de progression (v), les surfaces de focalisation (F1-F5) dans une bande (30a-e) respective présentant une direction de polarisation linéaire identique, et les surfaces de focalisation (F1-F5) des bandes (30a-e) adjacentes présentant chacune une direction de polarisation linéaire différente, soit au moyen d'une tête de traitement au laser (4) d'une machine de traitement au laser selon la revendication 11 lors de la focalisation des faisceaux partiels (11a, 11b) dans le plan de focalisation (2a), une pluralité de surfaces de focalisation (F1-F6) disposées en anneau autour de l'axe optique (15) d'une optique de focalisation (16) de la tête de traitement au laser (4) est générée, les surfaces de focalisation (F1-F6) disposées en anneau présentant une direction de polarisation linéaire orientée radialement par rapport à l'axe optique (15), et une surface de focalisation (FZ) disposée de façon centrale par rapport à l'axe optique (15), formée de préférence par un chevauchement spatial au moins partiel d'au moins deux des faisceaux partiels (11b), présentant une intensité de rayonnement (I_{Z}) plus élevée que la surface de focalisation (F1-F6) respective disposée en anneau.
